(19) Europäisches Patentamt
European Patent Office
Office européen des brevets

(11) **EP 4 354 744 A1**

(12) **EUROPEAN PATENT APPLICATION**
published in accordance with Art. 153(4) EPC

(43) Date of publication:
**17.04.2024 Bulletin 2024/16**

(21) Application number: **22824168.3**

(22) Date of filing: **13.06.2022**

(51) International Patent Classification (IPC):
**H04B 1/707** (2011.01)    **H04B 1/7103** (2011.01)
**H04L 25/02** (2006.01)

(52) Cooperative Patent Classification (CPC):
**H04B 1/707; H04B 1/7103; H04B 17/345;**
**H04L 25/02; H04W 12/60**

(86) International application number:
**PCT/CN2022/098477**

(87) International publication number:
**WO 2022/262688 (22.12.2022 Gazette 2022/51)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **15.06.2021  CN 202110662837**

(71) Applicant: **Huawei Technologies Co., Ltd.**
**Longgang**
**Shenzhen, Guangdong 518129 (CN)**

(72) Inventors:
• **ZHANG, Meihong**
  **Shenzhen, Guangdong 518129 (CN)**

• **SHI, Shuyu**
  **Nanjing, Jiangsu 210023 (CN)**
• **DU, Rui**
  **Shenzhen, Guangdong 518129 (CN)**
• **WANG, Wei**
  **Nanjing, Jiangsu 210023 (CN)**
• **HAN, Xiao**
  **Shenzhen, Guangdong 518129 (CN)**
• **SUN, Yingxiang**
  **Shenzhen, Guangdong 518129 (CN)**
• **LIU, Chenchen**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **SECURITY AWARENESS METHOD, DEVICES, COMPUTER-READABLE STORAGE MEDIUM AND CHIP**

(57)    The present disclosure provides a method for security sensing, a device, a computer-readable storage medium, and a chip. The method includes: An initiator device sends a security sensing request to a responder device, and receives a response to the security sensing request from the responder device. The response includes a first sequence authentication code and an initial value of a long training field (LTF) counter. The method further includes: receiving a plurality of null data packets (NDPs) used for the security sensing from the responder device. The plurality of NDPs each include a scrambled LTF sequence. The method further includes: descrambling, based on a derivation key shared between the initiator device and the responder device, the first sequence authentication code, and the initial value of the LTF counter, the scrambled LTF sequences in the plurality of NDPs, to obtain a plurality of descrambled LTF sequences. The method further includes: determining, based on the plurality of descrambled LTF sequences, channel state information (CSI). The method further includes: performing, based on the CSI, the security sensing. In this way, security and privacy protection for users of wireless sensing is implemented.

800 —

810

Send a security sensing request to a responder device

820

Receive a response to the security sensing request from the responder device, where the response includes a first sequence authentication code and an initial value of a long training field counter

830

Receive a plurality of null data packets used for security sensing from the responder device, where the plurality of null data packets each include a scrambled long training field sequence

840

Descramble, based on a derivation key shared between an initiator device and the responder device, the first sequence authentication code, and the initial value of the long training field counter, the scrambled long training field sequence in the plurality of null data packets, to obtain a plurality of descrambled long training field sequences

850

Determine, based on the plurality of descrambled long training field sequences, channel state information of a channel between the responder device and the initiator device

860

Perform, based on the channel state information, the security sensing

FIG. 8

**Description**

**TECHNICAL FIELD**

The present disclosure relates to the communication field, and more specifically, to a method for security sensing, a device, a computer-readable storage medium, and a chip.

**BACKGROUND**

With development of communication technologies, various wireless communication devices have been deployed in a large quantity in people's daily life. These wireless communication devices may include a mobile phone, a personal computer, a smart home device, a wireless sensor, a wireless router, and the like. Important features of these devices are that the devices are in large quantities and of low prices, and very close to users. In a common home environment, a user is usually surrounded by more than ten or even hundreds of wireless communication devices. In a process of performing communication in a wireless manner, these devices may sense interference caused by an action of a surrounding user to a radio channel, and sense the action of the surrounding user by measuring such interference. This type of technology is also referred to as a wireless sensing technology. The technology may be widely applied in intrusion detection, elderly care, gesture recognition, breathing and sleep monitoring, indoor population statistics, and the like.

The wireless sensing technology is to measure interference on a radio channel based on channel state information (Channel State Information, CSI). Because the CSI may be obtained by any receiving device, an attacker can easily infer an action of a user by obtaining the CSI, and consequently behavior privacy of the user is easily leaked.

**SUMMARY**

Example embodiments of the present disclosure provide a solution for security sensing.

According to a first aspect of the present disclosure, a method for security sensing implemented at an initiator device is provided. The method includes: An initiator device sends a security sensing request to a responder device. The method further includes: The initiator device receives a response to the security sensing request from the responder device, where the response includes a first sequence authentication code and an initial value of a long training field counter. The method further includes: The initiator device receives a plurality of null data packets used for the security sensing from the responder device, where the plurality of null data packets each include a scrambled long training field sequence. The method further includes: The initiator device descrambles, based on a derivation key shared between the initiator device and the responder device, the first sequence authentication code, and the initial value of the long training field counter, the scrambled long training field sequences in the plurality of null data packets, to obtain a plurality of descrambled long training field sequences. The method further includes: The initiator device determines, based on the plurality of descrambled long training field sequences, channel state information of a channel between the responder device and the initiator device. The method further includes: The initiator device performs, based on the channel state information, the security sensing.

In some embodiments, the descrambling the scrambled long training field sequence in the plurality of null data packets includes: The initiator device determines, based on the derivation key, the first sequence authentication code, and the initial value of the long training field counter, an index of a descrambling sequence and an index of a linear prediction coefficient set. The initiator device descrambles an initial scrambled long training field sequence in the plurality of null data packets by using the descrambling sequence, to obtain an initial descrambled long training field sequence. The initiator device descrambles a subsequent scrambled long training field sequence in the plurality of null data packets by using the linear prediction coefficient set and the initial descrambled long training field sequence, to obtain a subsequent descrambled long training field sequence.

In some embodiments, the descrambling a subsequent scrambled long training field sequence in the plurality of null data packets, to obtain a subsequent descrambled long training field sequence includes: obtaining an estimated value of an (n+1)th descrambled long training field sequence according to the following formula:

$$\hat{x}(n) = \sum_{i=1}^{p} a_i \hat{x}(n-i)$$

$\hat{x}(n)$ represents the estimated value of the (n+1)th descrambled long training field sequence, $a_i$ represents an $i$th linear prediction coefficient in the linear prediction coefficient set, and p represents a quantity of elements in the linear prediction coefficient set, where 7≤p≤15, 1≤i≤p, 1≤n≤N-1, and N represents a quantity of the plurality of null data packets.

In some embodiments, an initiator device sends a security sensing request to a responder device includes: The initiator device sends an initial fine timing measurement request frame to the responder device, where a trigger field in the initial fine timing measurement request frame is set to a predefined value, and the predefined value indicates the security sensing request.

In some embodiments, the method further includes: Before receiving each of the plurality of null data packets, the initiator device updates the initial value of the long training field counter in response to receiving a control frame associated with a corresponding null data packet from the responder device, to obtain a counter value obtained through updating, where the control frame includes a second sequence authentication code. The initiator device generates, based on the derivation key and the counter value obtained through updating, a first sequence authentication code obtained through updating. If the first sequence authentication code obtained through updating is different from the second sequence authentication code, the initiator device resends the security sensing request to the responder device.

According to a second aspect of the present disclosure, a method for security sensing implemented at a responder device is provided. The method includes: A responder device receives a security sensing request from an initiator device. The method further includes: The responder device sends a response to the security sensing request to the initiator device. The response includes a first sequence authentication code and an initial value of a long training field counter, and is used to descramble a plurality of scrambled long training field sequences. The method further includes: The responder device scrambles, based on a derivation key shared between the initiator device and the responder device and the initial value of the long training field counter, a plurality of long training field sequences, to obtain the plurality of scrambled long training field sequences. The method further includes: The responder device sends a plurality of null data packets used for the security sensing to the initiator device. The plurality of null data packets each include one of the plurality of scrambled long training field sequences.

In some embodiments, the scrambling a plurality of long training field sequences, to obtain the plurality of scrambled long training field sequences includes: The responder device determines, based on the derivation key and the initial value of the long training field counter, an index of a scrambling sequence and an index of a linear prediction coefficient set. The responder device scrambles an initial long training field sequence in the plurality of long training field sequences by using the scrambling sequence, to obtain an initial scrambled long training field sequence. The responder device scrambles a subsequent long training field sequence in the plurality of long training field sequences by using the linear prediction coefficient set and the initial scrambled long training field sequence, to obtain a subsequent scrambled long training field sequence.

In some embodiments, the scrambling a subsequent long training field sequence in the plurality of long training field sequences, to obtain a subsequent scrambled long training field sequence includes:
obtaining an estimated value of an (n+1)th scrambled long training field sequence according to the following formula:

$$\hat{x}(n) = \sum_{i=1}^{p} a_i \hat{x}(n - i)$$

$\hat{x}(n)$ represents the estimated value of the (n+1)th scrambled long training field sequence, $a_i$ represents an ith linear prediction coefficient in the linear prediction coefficient set, and p represents a quantity of elements in the linear prediction coefficient set, where 7≤p≤15, 1≤i≤p, 1≤n≤N-1, and N represents a quantity of the plurality of null data packets.

In some embodiments, a responder device receives a security sensing request from an initiator device includes: The responder device receives an initial fine timing measurement request frame from the initiator device, where a trigger field in the initial fine timing measurement request frame is set to a predefined value, and the predefined value indicates the security sensing request.

In some embodiments, the method further includes: Before sending each of the plurality of null data packets, the responder device updates the initial value of the long training field counter in response to being to send a control frame associated with a corresponding null data packet to the initiator device, to obtain a counter value obtained through updating. The responder device generates, based on the derivation key and the counter value obtained through updating, a first sequence authentication code obtained through updating to use as a second sequence authentication code. The responder device sends the control frame to the initiator device, where the control frame includes the second sequence authentication code, and the second sequence authentication code is used by the initiator device to determine whether to resend the security sensing request to the responder device.

According to a third aspect of the present disclosure, an initiator device is provided. The initiator device includes a sending unit, a receiving unit, a descrambling unit, a determining unit, and a sensing unit. The sending unit is configured to send a security sensing request to a responder device. The receiving unit is configured to receive a response to the security sensing request from the responder device, where the response includes a first sequence authentication code and an initial value of a long training field counter. The receiving unit is configured to receive a plurality of null data packets used for the security sensing from the responder device. The plurality of null data packets each include a scrambled long training field sequence. The descrambling unit is configured to descramble, based on a derivation key shared between the initiator device and the responder device, the first sequence authentication code, and the initial value of the long training field counter, the scrambled long training field sequence in the plurality of null data packets, to obtain a plurality of descrambled long training field sequences. The determining unit is configured to determine, based on the plurality of descrambled long training field sequences, channel state information of a channel between the responder device and the initiator device. The sensing unit is configured to perform, based on the channel state information, the security sensing.

In some embodiments, the descrambling unit is further configured to: determine, based on the derivation key, the first sequence authentication code, and the initial value of the long training field counter, an index of a descrambling sequence and an index of a linear prediction coefficient set; descramble an initial scrambled long training field sequence in the plurality of null data packets by using the descrambling sequence, to obtain an initial descrambled long training field sequence; and descramble a subsequent scrambled long training field sequence in the plurality of null data packets by using the linear prediction coefficient set and the initial descrambled long training field sequence, to obtain a subsequent descrambled long training field sequence.

In some embodiments, the descrambling unit is further configured to obtain an estimated value of an $(n+1)^{th}$ descrambled long training field sequence according to the following formula:

$$\hat{x}(n) = \sum_{i=1}^{p} a_i \hat{x}(n-i)$$

$\hat{x}(n)$ represents the estimated value of the $(n+1)^{th}$ descrambled long training field sequence, $a_i$ represents an $i^{th}$ linear prediction coefficient in the linear prediction coefficient set, and p represents a quantity of elements in the linear prediction coefficient set, where $7 \leq p \leq 15$, $1 \leq i \leq p$, $1 \leq n \leq N-1$, and N represents a quantity of the plurality of null data packets.

In some embodiments, the sending unit is further configured to: send an initial fine timing measurement request frame to the responder device, where a trigger field in the initial fine timing measurement request frame is set to a predefined value, and the predefined value indicates the security sensing request.

In some embodiments, the receiving unit is further configured to: before receiving each of the plurality of null data packets, receive a control frame associated with a corresponding null data packet from the responder device; and the device further includes an updating unit, configured to: update the initial value of the long training field counter in response to receiving a control frame associated with a corresponding null data packet from the responder device, to obtain a counter value obtained through updating, where the control frame includes a second sequence authentication code; generate, based on the derivation key and the counter value obtained through updating, a first sequence authentication code obtained through updating; and the sending unit is further configured to: if the first sequence authentication code obtained through updating is different from the second sequence authentication code, resend the security sensing request to the responder device.

According to a fourth aspect of the present disclosure, a responder device is provided. The responder device includes a receiving unit, a sending unit, and a scrambling unit. The receiving unit is configured to receive a security sensing request from an initiator device. The sending unit is configured to send a response to the security sensing request to the initiator device, where the response includes a first sequence authentication code and an initial value of a long training field counter, and is used to descramble a plurality of scrambled long training field sequences. The scrambling unit is configured to scramble, by the responder device based on a derivation key shared between the initiator device and the responder device and the initial value of the long training field counter, a plurality of long training field sequences, to obtain the plurality of scrambled long training field sequences. The sending unit is further configured to send a plurality of null data packets used for the security sensing to the initiator device, where the plurality of null data packets each include one of the plurality of scrambled long training field sequences.

In some embodiments, the scrambling unit is further configured to: determine, based on the derivation key and the initial value of the long training field counter, an index of a scrambling sequence and an index of a linear prediction coefficient set; scramble an initial long training field sequence in the plurality of long training field sequences by using the scrambling sequence, to obtain an initial scrambled long training field sequence; and scramble a subsequent long training field sequence in the plurality of long training field sequences by using the linear prediction coefficient set and the initial scrambled long training field sequence, to obtain a subsequent scrambled long training field sequence.

In some embodiments, the scrambling unit is further configured to obtain an estimated value of an $(n+1)^{th}$ scrambled long training field sequence according to the following formula:

$$\hat{x}(n) = \sum_{i=1}^{p} a_i \hat{x}(n-i)$$

$\hat{x}(n)$ represents the estimated value of the $(n+1)^{th}$ scrambled long training field sequence, $a_i$ represents an $i^{th}$ linear prediction coefficient in the linear prediction coefficient set, and p represents a quantity of elements in the linear prediction coefficient set, where $7 \leq p \leq 15$, $1 \leq i \leq p$, $1 \leq n \leq N-1$, and N represents a quantity of the plurality of null data packets.

In some embodiments, the receiving unit is further configured to receive an initial fine timing measurement request frame from the initiator device, where a trigger field in the initial fine timing measurement request frame is set to a predefined value, and the predefined value indicates the security sensing request.

In some embodiments, the device further includes an updating unit. The updating unit is configured to: before sending each of the plurality of null data packets, update the initial value of the long training field counter in response to being to send a control frame associated with a corresponding null data packet to the initiator device, to obtain a counter value obtained through updating; and generate, based on the derivation key and the counter value obtained through updating, a first sequence authentication code obtained through updating to use as a second sequence authentication code. In such embodiments, the receiving unit is further configured to send the control frame to the initiator device, where the control frame includes the second sequence authentication code, and is used by the initiator device to determine whether to resend the security sensing request to the responder device.

According to a fifth aspect of the present disclosure, a computer-readable storage medium is provided. The computer-readable storage medium stores a computer program. When the computer program is executed by a processor, the method according to the first aspect of the present disclosure is implemented.

According to a sixth aspect of the present disclosure, a computer-readable storage medium is provided. The computer-readable storage medium stores a computer program. When the computer program is executed by a processor, the method according to the second aspect of the present disclosure is implemented.

According to a seventh aspect of the present disclosure, a chip is provided. The chip includes a processing circuit and a communication interface. The processing circuit is configured to perform the method in the first aspect of the present disclosure.

According to an eighth aspect of the present disclosure, a chip is provided. The chip includes a processing circuit and a communication interface. The processing circuit is configured to perform the method in the second aspect of the present disclosure.

According to a ninth aspect of the present disclosure, a computer program product is provided. The computer program product includes machine-executable instructions. When the machine-executable instructions are executed by an initiator device, the initiator device is enabled to perform the method according to the first aspect of the present disclosure.

According to a tenth aspect of the present disclosure, a computer program product is provided. The computer program product includes machine-executable instructions. When the machine-executable instructions are executed by a responder device, the responder device is enabled to perform the method according to the second aspect of the present disclosure.

According to an eleventh aspect of the present disclosure, an initiator apparatus is provided. The initiator apparatus includes a component according to the third aspect or any implementation of the third aspect.

According to a twelfth aspect of the present disclosure, a responder apparatus is provided. The responder apparatus includes a component according to the fourth aspect or any implementation of the fourth aspect.

## BRIEF DESCRIPTION OF DRAWINGS

Features, advantages, and other aspects of each implementation in the present disclosure become clearer with reference to the accompanying drawings and with reference to the following detailed descriptions. Several implementations of the present disclosure are shown herein by way of an example rather than a limitation. In the accompanying drawings:

FIG. 1 is a schematic block diagram of a communication environment in which an embodiment of the present disclosure may be implemented;
FIG. 2 is a schematic diagram of an application scenario according to an embodiment of the present disclosure;
FIG. 3 is a signaling interworking diagram of a security sensing process according to some embodiments of the present disclosure;
FIG. 4A is a schematic diagram of a frame format of an initial fine timing measurement request frame according to some embodiments of the present disclosure;

FIG. 4B is a schematic diagram of a format of a ranging parameter field shown in FIG. 4A;

FIG. 4C is a schematic diagram of a format of a ranging parameter field shown in FIG. 4B;

FIG. 4D is a schematic diagram of a format of a secure long training field parameter field according to some embodiments of the present disclosure;

FIG. 4E is a schematic diagram of a format of a station information field of a null data packet announcement frame according to some embodiments of the present disclosure;

FIG. 5 is a waveform graph of CSI time-domain data corresponding to a walking action according to some embodiments of the present disclosure;

FIG. 6 is a time-domain waveform graph of estimated values of scrambled long training field sequences according to some embodiments of the present disclosure;

FIG. 7 is a spectrum graph of the CSI time-domain data shown in FIG. 5 and a spectrum graph of the estimated values of the scrambled long training field sequences shown in FIG. 6;

FIG. 8 is a flowchart of an example method for security sensing according to some embodiments of the present disclosure;

FIG. 9 is a flowchart of an example method for security sensing according to some other embodiments of the present disclosure;

FIG. 10 is a schematic block diagram of a communication device according to some embodiments of the present disclosure;

FIG. 11 is a schematic block diagram of a communication device according to some other embodiments of the present disclosure; and

FIG. 12 is a simplified block diagram of an example apparatus according to some embodiments of the present disclosure.

In each drawing, same or similar reference numerals represent same or similar elements.

## DESCRIPTION OF EMBODIMENTS

The following describes embodiments of the present disclosure in detail with reference to the accompanying drawings. Although some embodiments of the present disclosure are shown in the accompanying drawings, it should be understood that the present disclosure may be implemented in various forms, and should not be construed as being limited to embodiments described herein. On the contrary, these embodiments are provided for a more thorough and complete understanding of the present disclosure. It should be understood that the accompanying drawings and embodiments of the present disclosure are merely used as examples, but are not intended to limit the protection scope of the present disclosure.

In descriptions of embodiments of the present disclosure, the term "include" and similar terms thereof should be understood as open inclusion, that is, "include but are not limited to". The term "based on" should be understood as "at least partially based on". The terms "one embodiment" or "the embodiment" should be understood as "at least one embodiment". The terms "first", "second", and the like may indicate different or same objects. Other explicit and implicit definitions may also be included below. Such expressions as "at least one of A, B, and C" or "at least one of A, B, or C" should be understood as any one of the following: at least one A; at least one B; at least one C; at least one A and at least one B; at least one A and at least one C; at least one B and at least one C; and at least one A, at least one B, and at least one C. The foregoing uses three elements A, B, and C as an example for description. When there are more elements in an expression, a meaning of the expression may be obtained according to the foregoing rule.

Embodiments of the present disclosure may be used in any appropriate wireless communication system. The wireless communication system may be, for example, a wide area network system or a wireless local area network (Wireless Local Area Network, WLAN) system. The wireless communication system may support a plurality of WLAN communication protocols, for example, any protocol in 802.11az in the Institute of Electrical and Electronics Engineers (Institute of Electrical and Electronics Engineers, IEEE) 802.11 series protocols, or future IEEE 802.11 series. For the purpose of description, the following describes embodiments of the present disclosure in a context of the WLAN system. However, it should be understood that embodiments of the present disclosure are not limited to being used in the WLAN system, but may be used in any other communication system having a similar problem.

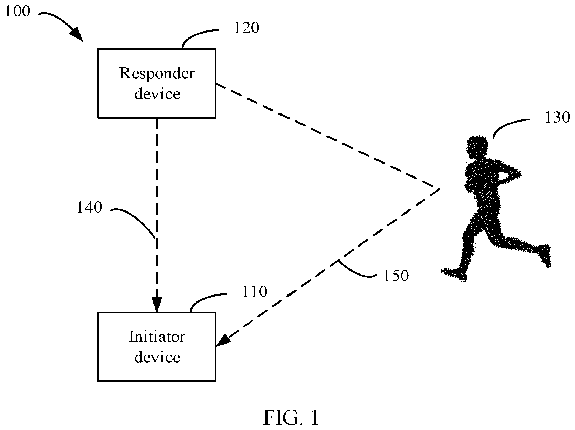

FIG. 1 is a schematic block diagram of a communication environment 100 in which an embodiment of the present disclosure may be implemented. As shown in the figure, the communication environment 100 includes an initiator device 110, a responder device 120, and a detection target 130.

The initiator device 110 is also referred to as an initiator station (Initiator Station, ISTA), and means any device that is capable of initiating a security sensing request and that performs security sensing based on a radio signal received from the responder device 120. The initiator device 110 may be a terminal device with a Wi-Fi communication function, for example, a mobile phone, a tablet computer, a personal digital assistant, a wireless sensor, a printer, a smart television, a smart bulb, or the like.

The responder device 120 is also referred to as a responder station (Responder Station, RSTA), and means any device that is capable of responding to the security sensing request and that assists the responder device 120 in performing the security sensing. The responder device 120 may be a network device with a Wi-Fi communication function, for example, a base station, a router, a gateway, a repeater, a server, a switch, a bridge, or the like.

It should be understood that, although the initiator device 110 and the responder device 120 are shown as physical devices independent of each other in FIG. 1, the initiator device 110 and the responder device 120 may alternatively be deployed in a single physical device in another embodiment.

The detection target 130 is any object whose action or behavior is sensed by the initiator device 110, for example, a person, an animal, or the like.

The initiator device 110 and the responder device 120 may communicate with each other, to perform wireless sensing on an action of the detection target 130. Specifically, the radio signal received by the initiator device 110 includes a superimposed signal obtained by superimposing a direct signal 140 and a reflected signal 150 that is reflected by the detection target 130. When the detection target 130 moves, the reflected signal 150 changes. In this way, the superimposed signal received by the initiator device 110 changes correspondingly. In this case, the initiator device 110 may detect that a radio channel between the initiator device 110 and the responder device 120 changes. Generally, a radio channel may be quantized and represented as CSI in a communication protocol. A change in the radio channel is represented by changes in an amplitude and a phase of the CSI. The initiator device 110 may perform wireless sensing based on a change in the CSI over time. For example, the initiator device 110 may sense, based on the change in the CSI over time, whether the detection target 130 moves and a specific action performed by the detection target 130.

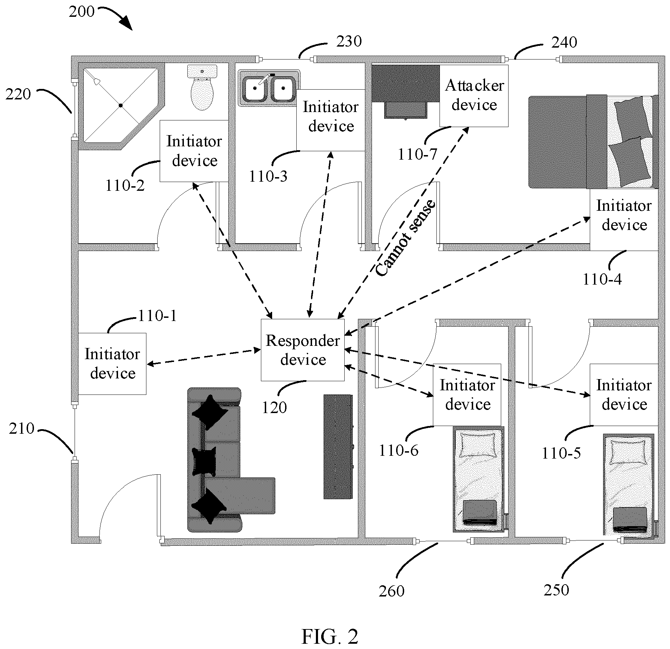

It may be understood that a quantity of the initiator devices 110 and a quantity of the responder devices 120 shown in FIG. 1 are merely examples, and are not intended to impose any limitation. Based on an actual requirement, the communication environment 100 may include any appropriate quantity of initiator devices 110 and any appropriate quantity of responder devices 120. For example, when embodiments of the present disclosure are used in a home environment, the communication environment 100 may include a plurality of initiator devices. In this case, the responder device 120 may communicate with the plurality of initiator devices to monitor the entire home environment. The following describes this application scenario with reference to FIG. 2.

FIG. 2 is a schematic diagram of an application scenario of some embodiments of the present disclosure in a home environment 200. As shown in the figure, the home environment 200 includes a living room 210, a bathroom 220, a kitchen 230, and bedrooms 240, 250, and 260. The responder device 120 in the living room 210 may communicate with an initiator device 110-1 in the living room, to sense an action of a detection target (not shown) in the living room 210. The responder device 120 may separately communicate with an initiator device 110-2 in the bathroom 220 and an initiator device 110-3 in the kitchen 230, to sense actions of detection targets (not shown) in the bathroom 220 and the kitchen 230. The responder device 120 may further separately communicate with initiator devices 110-4 to 110-6 in the bedrooms 240 to 260, to detect sleep statuses of detection targets (not shown) in the bedrooms 240 to 260.

In addition, there is an attacker device 110-7 (also referred to as an illegal device) in the bedroom 240. Although the attacker device 110-7 may receive a radio signal from the responder device 120, the attacker device 110-7 is not capable of monitoring, based on the received radio signal, the sleep status of the detection target in the bedroom 240.

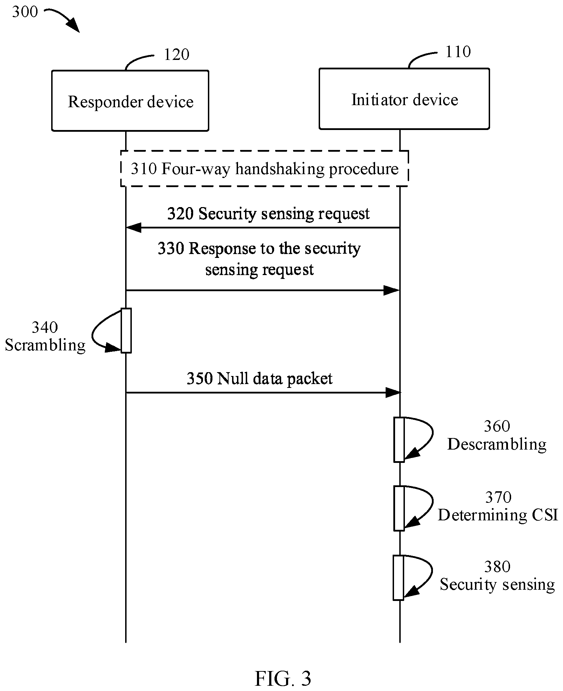

The following describes embodiments of the present disclosure in detail with reference to FIG. 3 to FIG. 7.

FIG. 3 is a signaling interworking diagram of a security sensing process 300 according to some embodiments of the present disclosure. For the purpose of description, the security sensing process 300 is described with reference to various elements shown in FIG. 1. However, it should be understood that the security sensing process 300 may further be performed between an initiator device and a responder device in any other communication scenario. For example, the security sensing process 300 may further be used between any one of the initiator devices 110-1 to 110-6 in the home environment 200 and the responder device 120 shown in FIG. 2.

As shown in FIG. 3, in 320, the initiator device 110 sends a security sensing request to the responder device 120. In some embodiments, the initiator device 110 may send an initial fine timing measurement request (Initial Fine Timing Measurement Request, IFTMR) frame to the responder device 120. A trigger field in the IFTMR frame may be set to a predefined value, and the predefined value may indicate the security sensing request.

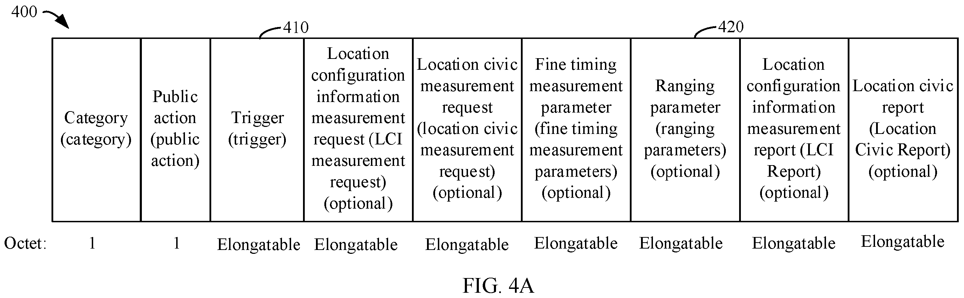

FIG. 4A is a schematic diagram of a frame format of an IFTMR frame. As shown in FIG. 4A, an IFTMR frame 400 includes at least a trigger (trigger) field 410 and a ranging parameter (Ranging Parameter) field 420. Meanings of values of the trigger field 410 are shown in the following Table 1.

**Table 1**

| Value | Meaning |
| --- | --- |
| 1 | The initiator station requests the responder station to start or continue to send the fine timing measurement frame. |

(continued)

| Value | Meaning |
|---|---|
| 2 | An EDMG initiator station initiates an FTM measurement exchange using a first path antenna weight vector. |
| 3 | The EDMG initiator station indicates that a subsequent FTM burst should include LOS evaluation and measurement. |
| 4 | If the FTM burst is performed on the first path antenna weight vector, the LOS evaluation and measurement should be included. |
| | |
| 5 | The initiator station requests the responder station to initiate the security sensing process. |
| 6 to 255 | Reserved |

In a conventional technology, values 5 to 255 of the trigger field 410 are reserved. However, in some embodiments of the present disclosure, any one of the values 5 to 255 may be predefined to indicate the security sensing request. In other words, a value of the trigger field in the IFTMR frame may be set to one of 5 to 255, to indicate the initiator station to request the responder station to initiate the security sensing process. For example, as shown in Table 1, when the value of the trigger field is set to 5, the initiator station is indicated to request the responder station to initiate the security sensing process. Correspondingly, values 6 to 255 are reserved. A "reserved" value means that a function and usage of the value are not defined currently, and may have other meanings that are reserved for future definition.

It should be understood that using the value 5 of the trigger field 410 to indicate the security sensing request is merely an example. In another embodiment, any one of the values 6 to 255 may alternatively be used to indicate the security sensing request. In addition, in description, the meaning of the value that is of the trigger field 410 and that is used to indicate the security sensing request may be different from the meaning shown in Table 1, provided that the value is capable of indicating the security sensing request or a wireless sensing request. For example, the value 5 of the trigger field 410 may be defined as that the initiator station requests the responder station to initiate a security sensing measurement process, or the initiator station requests the responder station to initiate a wireless sensing process.

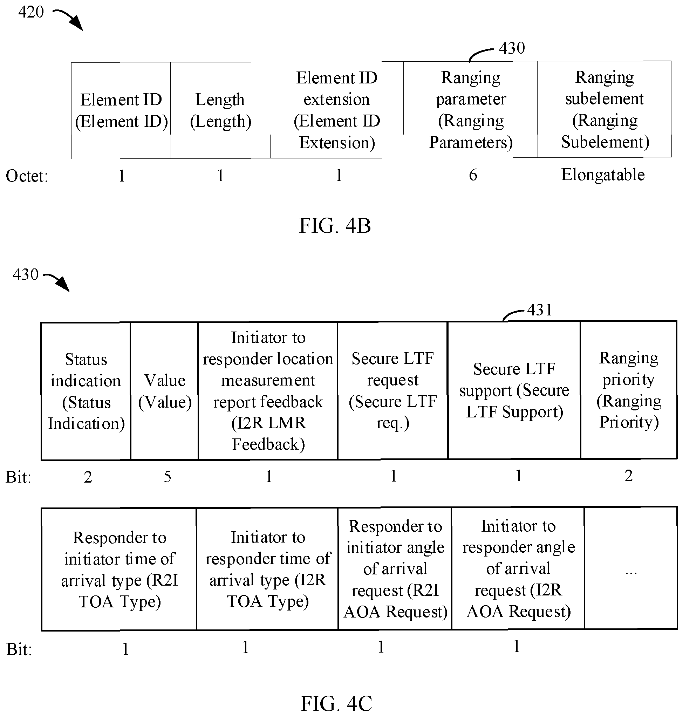

FIG. 4B is a schematic diagram of a format of a ranging parameter field 420 shown in FIG. 4A. As shown in FIG. 4B, the ranging parameter field 420 includes a ranging parameter subfield 430. FIG. 4C is a schematic diagram of a format of a ranging parameter subfield 430 shown in FIG. 4B. As shown in FIG. 4C, the ranging parameter subfield 430 includes a secure LTF support (Secure LTF Support) subfield 431. In an embodiment in which the security sensing request is sent by sending the IFTMR frame 400, the responder device 120 may set a value of the secure LTF support subfield 431 to a predefined value, to indicate that the responder device 120 supports CSI measurement based on a scrambled LTF sequence. The predefined value may be, for example, 1.

Return to FIG. 3. In 330, after successfully receiving the security sensing request, the responder device 120 sends a response to the security sensing request to the initiator device 110. The response to the security sensing request includes a first sequence authentication code (Sequence Authentication Code, SAC) and an initial value of a long training field (Long Training Field, LTF) counter.

In some embodiments, optionally, that dot11SecureLTFImplemented in the responder device 120 is set to 1 indicates that the responder device 120 agrees to enable the security sensing process, and the responder device 120 sends the response to the security sensing request to the initiator device 110.

In some embodiments, optionally, after successfully receiving the security sensing request, the responder device 120 may first send an acknowledgment (ACK) (not shown in FIG. 3) to the initiator device 110. After sending the ACK, the responder device 120 sends the response to the security sensing request to the initiator device 110.

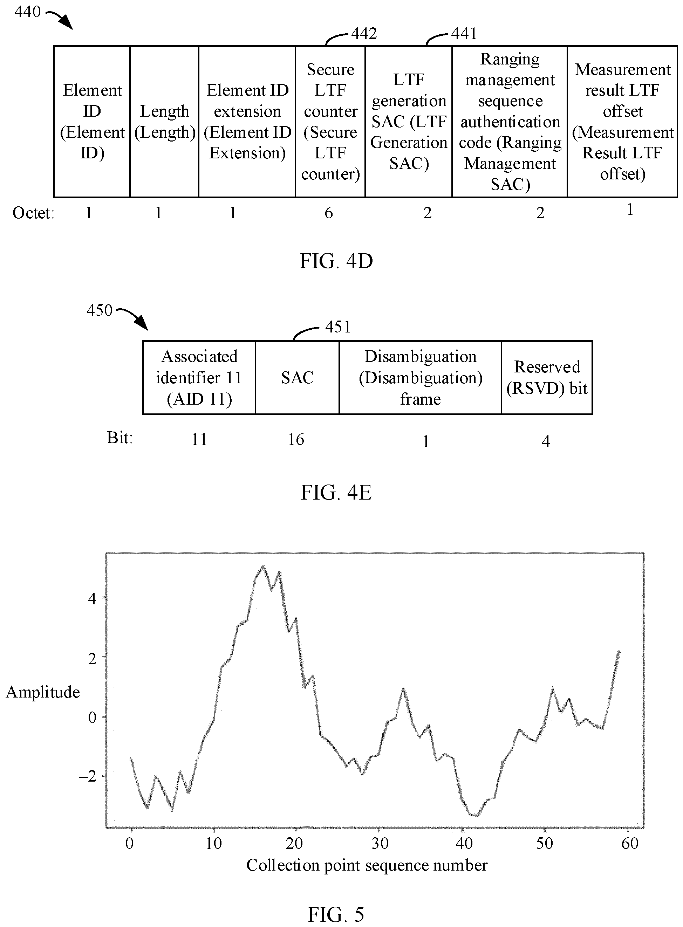

In some embodiments, the responder device 120 may send the response to the security sensing request by sending an initial fine timing measurement (Initial Fine Timing Measurement, IFTM) frame to the initiator device 110. In such embodiments, the IFTM frame may include a secure LTF parameter (Secure LTF Parameter) field. FIG. 4D is a schematic diagram of a format of a secure LTF parameter field 440. As shown in FIG. 4D, the secure LTF parameter field 440 includes an LTF generation SAC (LTF Generation SAC) subfield 441 and a secure LTF counter (Secure LTF Counter) subfield 442. An LTF generation SAC field is used to carry the first SAC described above, and the secure LTF counter subfield 442 is used to carry the initial value of the LTF counter.

Before sending the response to the security sensing request, the responder device 120 may determine a value of the secure LTF counter subfield 442 and a value of the LTF generation SAC subfield 441. In some embodiments, the responder device 120 may initialize the value of the secure LTF counter subfield 442 to 0 (for example, 48 bits). In other words, the initial value of the LTF counter may be 0. It may be understood that the initial value of the LTF counter may be any appropriate value, and a scope of the present disclosure is not limited in this aspect.

In addition, in some embodiments, the responder device 120 may determine, based on the initial value of the LTF counter and a derivation key shared between the initiator device 110 and the responder device 120, the value of the LTF generation SAC subfield 441, that is, the first SAC. As an example, the responder device 120 may generate, based on a hash (Hash) function shown in Formula (1), the value of the LTF generation SAC subfield 441:

$$\text{SAC}\|\text{Secure-LTF-bits-R2I}\|\text{LPC-type}=\text{KDF-Hash-Length(Secure-LTF-key-seed,}$$

$$\text{"Secure LTF Extension", Secure-LTF-Counter)} \qquad (1)$$

SAC represents the value of the LTF generation SAC subfield 441 (that is, the first SAC, with a length of 16 bits), Secure-LTF-bits-R2I represents a scrambling sequence, LPC-type represents an index of a linear prediction coefficient (Linear Prediction Coefficient, LPC) set, Secure-LTF-key-seed represents the derivation key shared between the initiator device 110 and the responder device 120, Secure LTF Extension indicates that a sum of lengths of SAC, Secure-LTF-bits-R2I, and LPC-type is extended to a predetermined length (for example, 272 bits) by adding zeros, and Secure-LTF-Counter represents an initial value of the secure LTF counter subfield 442. Secure-LTF-bits-R2I and LPC-type may be used to scramble an LTF sequence. This will be described in detail below.

It should be understood that the foregoing Formula (1) is merely an example used to determine the first SAC. The responder device 120 may determine, based on the initial value of the LTF counter and the derivation key, the first SAC by using any appropriate algorithm.

In addition, the secure LTF parameter field may further include a secure LTF request (Secure LTF Request) subfield (not shown in FIG. 4D). To indicate to the initiator device 110 that the responder device 120 agrees to enable the security sensing process, the responder device 120 may set a value of the secure LTF request subfield to a predefined value. The predefined value may be, for example, 1.

Still refer to FIG. 3. In some embodiments, to determine the derivation key Secure-LTF-key-seed, in 310, the initiator device 110 and the responder device 120 may exchange a pairwise transient key security association (Pairwise Transient Key Security Association, PTKSA) through a conventional four-way handshaking procedure. Then, the initiator device 110 and the responder device 120 may separately determine, based on the PTKSA, a key derivation key (Key Derivation Key, KDK). Further, the initiator device 110 and the responder device 120 may separately determine, based on the KDK, the derivation key Secure-LTF-key-seed. For example, the responder device 120 may generate, based on a hash function shown in Formula (2), the derivation key Secure-LTF-key-seed:

$$\text{Secure-LTF-key-seed} = \text{HMAC-Hash(KDK, "Secure LTF key seed")} \qquad (2)$$

In some embodiments, optionally, after successfully receiving the response to the security sensing request, the initiator device 110 may send an ACK (not shown in FIG. 3) to the responder device 120. In addition, the initiator device 110 may obtain the first SAC and the initial value of the LTF counter from the response to the security sensing request, and store the first SAC and the initial value of the LTF counter locally. In addition, the initiator device 110 may use the initial value of the LTF counter as a quantity of received NDPs (that is, a quantity of scrambled LTF sequences), to determine whether an NDP is lost. This will be described in detail below.

In some embodiments, the initiator device 110 may locally calculate, based on the initial value of the LTF counter obtained from the response to the security sensing request and the shared derivation key, the SAC, for example, according to Formula (1). Then, the initiator device 110 may compare the calculated SAC with the first SAC obtained from the response to the security sensing request. If the calculated SAC and the first SAC are different, it indicates that the obtained first SAC is not generated based on a key shared between the initiator device 110 and the responder device 120. In this way, the initiator device 110 may determine that the responder device 120 is an illegal terminal, and may further end the security sensing process.

After sending the response to the security sensing request, in 340, the responder device 120 scrambles, based on the derivation key shared between the initiator device 110 and the responder device 120 and the initial value of the long training field sequence counter, a plurality of LTF sequences, to obtain a plurality of scrambled LTF sequences.

It may be understood that scrambling the LTF sequence enables elements in an original LTF sequence to be randomly distributed in time domain. Therefore, scrambling the LTF sequence is also referred to as randomizing the LTF sequence, and the scrambled LTF sequence is also referred to as a randomized LTF sequence. Correspondingly, descrambling the LTF sequence is also referred to as derandomizing the LTF sequence, and a descrambled LTF sequence is also referred to as a derandomized LTF sequence.

In 350, the responder device 120 sends a plurality of null data packets (Null Data Packets, NDPs) used for security sensing to the initiator device 110. Each NDP includes one scrambled LTF sequence in the plurality of scrambled LTF sequences.

In some embodiments, before sending each of the plurality of NDPs, the responder device 120 may send a control frame associated with a corresponding NDP to the initiator device 110. The control frame may indicate that the responder device 120 is to send an NDP to the initiator device 110. An example of the control frame may include a null data packet announcement (Null Data Packet Announcement, NDPA) frame.

In some embodiments, in response to being to send a control frame to the initiator device 110, the responder device 120 may update the initial value of the LTF sequence counter, to obtain a counter value obtained through updating. In other words, each time before the control frame is sent, the responder device 120 may update the initial value of the LTF sequence counter. For example, the responder device 120 may update the initial value of the LTF sequence counter by increasing the initial value of the LTF sequence counter by 1. Further, the responder device 120 may generate, based on the derivation key shared between the initiator device 110 and the responder device 120 and the counter value obtained through updating, an updated first SAC. For example, the responder device 120 may generate, according to Formula (1), the updated first SAC. Then, the responder device 120 may send a control frame to the initiator device 110, where the control frame includes the updated first SAC. In the following, the first SAC updated by the responder device 120 is also referred to as a second SAC.

In an embodiment in which the NDPA frame is used as a control frame, the NDPA frame may include a station information (STA Info) field. FIG. 4E is a schematic diagram of a format of a station information field 450 of an NDPA frame. As shown in FIG. 4E, the station information field 450 includes an SAC subfield 451 and is used to carry the updated first SAC (that is, the second SAC).

Each time after receiving the control frame, the initiator device 110 may update the initial value of the LTF counter obtained from the response to the security sensing request, to obtain the counter value obtained through updating. In other words, each time after receiving the control frame, the initiator device 110 may update the quantity of received NDPs. Then, the initiator device 110 may generate, based on the derivation key shared between the initiator device 110 and the responder device 120 and the counter value obtained through updating, an updated first SAC. For example, the initiator device 110 may generate, according to Formula (1), the updated first SAC. Then, the initiator device 110 may compare the updated first SAC generated by the initiator device 110 with the second SAC obtained from the control frame. If the updated first SAC is different from the second SAC, the initiator device 110 may determine that an NDP is lost. Further, the initiator device 110 may resend the security sensing request to the responder device 120.

In addition, in some embodiments, the initiator device 110 may further use the quantity of received NDPs to facilitate correct descrambling of the scrambled LTF sequences in the received NDPs. This will further be described in detail below with reference to an algorithm used to determine the linear prediction coefficient set.

Still refer to FIG. 3. After receiving the plurality of NDPs from the responder device 120, in 360, the initiator device 110 descrambles, based on the derivation key shared between the initiator device 110 and the responder device 120, the first SAC, and the initial value of the LTF sequence counter, the scrambled LTF sequences in the plurality of NDPs, to obtain a plurality of descrambled LTF sequences.

In 370, the initiator device 110 determines, based on the plurality of descrambled LTF sequences, CSI of a channel between the responder device 120 and the initiator device 110. Because the original LTF sequence (that is, an LTF sequence before scrambling) is known to both the initiator device 110 and the responder device 120, the initiator device 110 may determine, based on the descrambled LTF sequence and the original LTF sequence, the CSI. For example, the initiator device 110 may determine, according to Formula (3), the CSI:

$$\widehat{H} = {R_{RLTF}}\big/{L_{LTF}} \tag{3}$$

$\widehat{H}$ represents the CSI, $R_{RLTF}$ represents the descrambled LTF sequence, and $L_{LTF}$ represents the original LTF sequence.

After the CSI is determined, in 380, the initiator device 110 performs, based on the determined CSI, the security sensing. It may be understood that the initiator device 110 may perform, based on the determined CSI, the security sensing by using any known or to-be-developed algorithm. The scope of the present disclosure is not limited in this aspect.

Impact of movement of the detection target 130 on the CSI has a correlation in time, and a phase change in the CSI caused by the movement of the detection target 130 is continuous. By using a solution of the present disclosure, the initiator device 110 may receive the plurality of NDPs from the responder device 120, and may obtain the plurality of descrambled LTF sequences by descrambling the scrambled LTF sequences in the plurality of NDPs. Further, the initiator device 110 may obtain, based on the plurality of descrambled LTF sequences, CSI data of the channel within a period of time. By using the obtained CSI data within a period of time, the initiator device 110 may sense whether the detection target 130 is moving and a specific action performed by the detection target 130.

In addition, because an illegal initiator device is not capable of learning the derivation key shared between the initiator device 110 and the responder device 120, the illegal initiator device is not capable of learning a scrambling manner of an LTF sequence in an NDP. Therefore, although the attacker device may receive an NDP from the responder device, the attacker device is not capable of descrambling an LTF sequence in the NDP. Therefore, the attacker device is not capable of obtaining CSI data of the channel, and is not capable of sensing an action or a behavior of the detection target 130 by using the CSI data. In this way, behavior privacy of the detection target 130 is protected.

In addition, it may be understood that, in the solution of the present disclosure, the LTF sequence is modified in a randomized manner by scrambling the LTF sequence, but wireless data transmitted between the initiator device 110 and the responder device 120 is not modified. Therefore, the solution of the present disclosure implements security privacy protection for a user of the wireless sensing when the solution coexists with an existing wireless data transmission function.

In some embodiments, the initiator device 110 may use an NDP to perform CSI feedback. Compared with a conventional technology in which the CSI feedback is performed by using data, in embodiments of the present disclosure, occupation of the channel by the CSI feedback is reduced. For example, in the conventional technology, CSI measurement may be performed on 114 subcarriers. When the initiator device 110 uses four transmit antennas and the responder device 120 uses four receive antennas, CSI associated with each subcarrier is a 4*4 matrix, each matrix element is a complex number, and a real part and an imaginary part each are represented by using an 8-bit integer. In this way, the CSI matrix associated with the 114 subcarriers needs to occupy 3648 bytes. Even if a compression algorithm in the IEEE 802.11ac protocol is used, in the conventional technology, thousands of bytes are needed to indicate a measurement result of the CSI. However, in embodiments of the present disclosure, an NDP is used to perform reverse measurement, and the NDP includes only an LTF header, but does not include data. This greatly reduces occupation of the channel. In addition, a short NDP further allows a plurality of initiator devices to simultaneously perform the CSI feedback through frequency division or space division. This further reduces costs of the CSI measurement.

In the following, with reference to specific embodiments, how to scramble the plurality of LTF sequences to obtain the plurality of scrambled LTF sequences (that is, randomized LTF sequences) is described in detail.

Impact of an action of the detection target on the channel has a correlation. Therefore, the randomized LTF sequences in the plurality of NDPs should have a same correlation in time sequence. Otherwise, the attacker device may distinguish, by using the channel characteristics, impact of the randomized LTF sequence on the channel and the impact of the action of the detection target on the channel. In embodiments of the present invention, by using the linear predictive coding method, it can be ensured that the impact of the randomized LTF sequence and the impact of the action of the detection target have a same correlation on the channel, achieving an objective of the security sensing.

To obtain the plurality of scrambled LTF sequences that may achieve the objective of the security sensing, in some embodiments, the responder device 120 may determine, based on the derivation key shared between the initiator device 110 and the responder device 120 and the initial value of the LTF sequence counter, an index of the scrambling sequence and an index of the linear prediction coefficient set. As an example, the responder device 120 may determine, based on the hash Hash function shown in Formula (1), the index of the scrambling sequence and the index of the linear prediction coefficient set. It should be understood that Formula (1) is merely an example used to determine the index of the scrambling sequence and the index of the linear prediction coefficient set. The responder device 120 may determine, based on the initial value of the LTF counter and the derivation key, the two parameters by using any appropriate method.

After the scrambling sequence is determined, the responder device 120 may scramble an initial LTF sequence in the plurality of LTF sequences by using the scrambling sequence, to obtain an initial scrambled LTF sequence. Herein, the initial scrambled LTF sequence is a scrambled LTF sequence to be sent in an initial NDP (that is, a first NDP). In some embodiments, the responder device 120 may scramble the initial LTF sequence to obtain the initial scrambled LTF sequence by using a same method as that used to generate the randomized LTF sequence by using the scrambling sequence Secure-LTF-bits-R2I in a secure fine timing measurement (Secure Fine Timing Measurement) positioning protocol in the IEEE 802.11az protocol. For example, the responder device 120 may obtain the initial scrambled LTF sequence by multiplying the initial LTF sequence by the scrambling sequence Secure-LTF-bits-R2I.

In addition, the responder device 120 may be preconfigured with a plurality of linear prediction coefficient sets. After the index of the linear prediction coefficient set is determined, the responder device 120 may determine, from the plurality of preconfigured linear prediction coefficient sets, a linear prediction coefficient set associated with the index. Further, the responder device 120 may scramble a subsequent LTF sequence in the plurality of LTF sequences by using the determined linear prediction coefficient set and the initial scrambled LTF sequence, to obtain a subsequent scrambled LTF sequence. Herein, the subsequent scrambled LTF sequence is a scrambled LTF sequence to be sent in an NDP following the initial NDP.

Similarly, the initiator device 110 may determine, based on the derivation key shared between the initiator device 110 and the responder device 120 and the initial value of the LTF sequence counter, an index of a descrambling sequence and the index of the linear prediction coefficient set. As an example, the initiator device 110 may determine, according to the hash (Hash) algorithm shown in Formula (1), the index of the descrambling sequence and the index of the linear prediction coefficient set. It should be understood that Formula (1) is merely an example used to determine the index of the descrambling sequence and the index of the linear prediction coefficient set. The initiator device 110 may determine, based on the initial value of the LTF counter and the derivation key, the two parameters by using any appropriate algorithm.

After the descrambling sequence is determined, the initiator device 110 may descramble an initial scrambled LTF sequence in the plurality of scrambled LTF sequences by using the descrambling sequence, to obtain an initial descrambled LTF sequence. Herein, the initial descrambled LTF sequence is an LTF sequence obtained by descrambling a scrambled LTF sequence in the initial NDP (that is, the first NDP). In some embodiments, the initiator device 110 may descramble the initial scrambled LTF sequence to obtain the initial descrambled LTF sequence by using a same method as that used to generate the derandomized LTF sequence by using the descrambling sequence Secure-LTF-bits-I2R in a secure fine timing measurement (Secure Fine Timing Measurement) positioning protocol in the IEEE 802.11az protocol.

In addition, the initiator device 110 may be preconfigured with a plurality of linear prediction coefficient sets that are the same as those of the responder device 120. After the index of the linear prediction coefficient set is determined, the initiator device 110 may determine, from the plurality of preconfigured linear prediction coefficient sets, a linear prediction coefficient set associated with the index. Further, the initiator device 110 may descramble a subsequent scrambled LTF sequence in the plurality of scrambled LTF sequences by using the determined linear prediction coefficient set and the initial descrambled LTF sequence, to obtain a subsequent descrambled LTF sequence. Herein, the subsequent descrambled LTF sequence is an LTF sequence obtained by descrambling the scrambled LTF sequence in the NDP following the initial NDP.

In the following, an algorithm used to determine the plurality of preconfigured linear prediction coefficient sets is described with reference to a specific example. Each linear prediction coefficient set may include any appropriate quantity of elements. In the following example, an example in which each linear prediction coefficient set includes nine elements is used for description. However, it should be understood that this is merely an example and that the scope of the present disclosure is not limited in this aspect. The quantity of elements in the linear prediction coefficient set is also referred to as an order of the linear prediction coefficient. In other words, in this example, the order of the linear prediction coefficient is 9.

### Algorithm in brief

Algorithm input: CSI data associated with an action within a period of time. An example of the action may include but is not limited to walking, running, tumbling, boxing, and the like. The CSI data associated with an action is obtained in the following manner: An existing network adapter supporting CSI extraction is used as a receiver to obtain CSI of a detection target during execution of the action in a test environment (for example, the environment 100 shown in FIG. 1). The CSI data associated with the action may be represented as $\{x_m \mid m = 0,1,2 ..., N - 1\}$ in time domain.

Algorithm output: a 9-order linear prediction coefficient that may be expressed as $\{a_i \mid i = 1,2,3 ...,9\}$.

### Algorithm description

$$\hat{x}(n) = \sum_{i=1}^{p} a_i x(n - i) \tag{4}$$

x(n) represents an $(n+1)^{th}$ scrambled LTF sequence, $\hat{x}(n)$ represents an estimated value of x(n), $a_i$ represents an $i^{th}$ linear prediction coefficient in the linear prediction coefficient set, p represents the quantity of elements in the linear prediction coefficient set (that is, the order of the linear prediction coefficient), where $7 \leq p \leq 15$ (in this example, p=9), $1 \leq i \leq p$, $1 \leq n \leq N-1$, and N represents a total quantity of NDPs that are used for the security sensing and that are sent by the responder device to the initiator device. It can be learned from Formula (4) that $\hat{x}(n)$ is a linear combination of p scrambled LTF sequences $\{x_i \mid i = n - p, n - p + 1, ..., n - 1\}$ before $\hat{x}(n)$.

A difference between x(n) and the estimated value $\hat{x}(n)$ of x(n) is referred to as a linear prediction error, and is represented by e(n) as follows:

$$e(n) = x(n) - \hat{x}(n) = x(n) - \sum_{i=1}^{p} a_i x(n-i) \qquad (5)$$

A basic problem of linear prediction is to determine a group of linear prediction coefficients $\{a_i | i = 1,2,3 \ldots,9\}$ (that is, one linear prediction coefficient set) based on an input signal, so that an error is minimized under a specific criterion. For example, the criterion may be a "least mean square" (Least Mean Square, LMS) criterion. A predicted quadratic error E is:

$$E = \sum_{n} \left( x(n) - \sum_{i=1}^{p} a_i x(n-i) \right)^2 \qquad (6)$$

To minimize E, each linear prediction coefficient $a_j$ should satisfy that a partial derivative of E to $a_j$ is equal to 0, that is:

$$\frac{\partial E}{\partial a_j} = 0, (1 \leq j \leq p) \qquad (7)$$

$$\frac{\partial E}{\partial a_j} = 2 \sum_{n} x(n)x(n-j) - 2 \sum_{i=1}^{p} a_i \sum_{n} x(n-i)x(n-j) \qquad (8)$$

In this way, the following system of linear equations may be obtained:

$$\sum_{n} x(n)x(n-j) = \sum_{i=1}^{p} a_i \sum_{n} x(n-i)x(n-j), (1 \leq j \leq p) \qquad (9)$$

If a definition is as follows:

$$\emptyset(j, i) = \sum_{n} x(n-i)x(n-j), (1 \leq j \leq p) \qquad (10)$$

Then, Formula (9) may be rewritten as:

$$\emptyset(j, 0) = \sum_{i=1}^{p} a_i \emptyset(j, i), (1 \leq j \leq p) \qquad (11)$$

The algorithm defines x(n) to be equal to 0 when n falls outside $0 \leq n \leq N - 1$, that is $x(i) = 0, i \in (-\infty, 0) \cup (N - 1, +\infty)$. An autocorrelation function r(j) of x(n) is defined as:

$$r(j) = \emptyset(j, 0) = \sum_{n} x(n)x(n-j), (1 \leq j \leq p) \qquad (12)$$

Because only a related result of input data is of interest, the autocorrelation function r(j) may be expressed as:

$$r(j) = \sum_{n=0}^{N-1} x(n)x(n-j), (1 \le j \le p) \qquad (13)$$

It can be learned by comparing Formula (10) and Formula (12) that $\emptyset(j, i) = r(j - i) = r(|j - i|)$. Therefore, Formula (11) may be expressed as:

$$\begin{bmatrix} r(0) & r(1) & r(2) & \cdots & r(p-1) \\ r(1) & r(0) & r(1) & \cdots & r(p-2) \\ r(2) & r(1) & r(0) & \cdots & r(p-3) \\ \vdots & \vdots & \vdots & \cdots & \vdots \\ r(p-1) & r(p-2) & r(p-3) & \cdots & r(0) \end{bmatrix} \begin{bmatrix} a_1 \\ a_2 \\ a_3 \\ \vdots \\ a_p \end{bmatrix} = \begin{bmatrix} r(1) \\ r(2) \\ r(3) \\ \vdots \\ r(p) \end{bmatrix} \qquad (14)$$

A leftmost matrix in Formula (14) is referred to as a correlation matrix. The correlation matrix is symmetric with respect to a main diagonal, and all elements on a diagonal parallel to the main diagonal are equal. This matrix is referred to as a Toeplitz matrix. A coefficient matrix is a linear equation of the Toeplitz matrix, which is referred to as a Yule-Walker equation. The Yule-Walker equation does not require a lot of calculations like a general equation does, and an efficient recursive solution may be obtained by using properties of the Toeplitz matrix. Solving Equation (11) may yield a group of linear prediction coefficients $\{a_i | i = 1,2,3 ...,p\}$, that is, one linear prediction coefficient set.

Because the linear prediction coefficient set is obtained by using CSI data associated with an action as the algorithm input, the linear prediction coefficient set obtained in this manner is also referred to as a linear prediction coefficient set associated with the action.

As described above, an initial scrambled LTF sequence x(0) is obtained by scrambling the initial LTF sequence in the plurality of LTF sequences by using the scrambling sequence. Therefore, the initial scrambled LTF sequence x(0) is the same as an estimated value $\hat{x}(0)$ of the initial scrambled LTF sequence x(0). Therefore, in this specification, the initial scrambled LTF sequence x(0) may be used interchangeably with the estimated value $\hat{x}(0)$ of the initial scrambled LTF sequence x(0).

After the linear prediction coefficient is determined, provided that a first scrambled LTF sequence x(0) (that is, the initial scrambled LTF sequence) is determined, the estimated value of the $(n+1)^{th}$ scrambled LTF sequence can be determined according to Formula (15):

$$\hat{x}(n) = \sum_{i=1}^{p} a_i \hat{x}(n-i) \qquad (15)$$

$\hat{x}(n)$ is defined to be equal to 0 when n falls outside $0 \le n \le N - 1$, that is, $\hat{x}(i) = 0$, 16 $(-\infty, 0) \cup (N - 1, +\infty)$. It can be learned from Formula (15) that, the estimated value of the $(n+1)^{th}$ scrambled LTF sequence is a linear combination of estimated values of p scrambled LTF sequences before the estimated value of the $(n+1)^{th}$ scrambled LTF sequence. A coefficient of the linear combination is an element in the linear prediction coefficient set. For example, when p=9, an estimated value of a tenth scrambled LTF sequence is a linear combination of an estimated value of a first scrambled LTF sequence to an estimated value of a ninth scrambled LTF sequence, an estimated value of an eleventh scrambled LTF sequence is a linear combination of an estimated value of a second scrambled LTF sequence to the estimated value of the tenth scrambled LTF sequence, and so on.

It should be understood that, in the foregoing embodiment, the first scrambled LTF sequence is represented by n=0. In another embodiment, the first scrambled LTF sequence is represented by n=1. In this case, the estimated value $\hat{x}(0)$ of the initial scrambled LTF sequence may alternatively be represented by $\hat{x}(1)$. Correspondingly, $\hat{x}(n)$ may represent an estimated value of an $n^{th}$ scrambled LTF sequence. The scope of the present disclosure is not limited in this aspect.

Linear prediction coefficient sets associated with walking, running, tumbling, and boxing actions are separately obtained by using the foregoing algorithm, as shown in Table 2 below.

**Table 2**

| LPC | $a_1$ | $a_2$ | $a_3$ | $a_4$ | $a_5$ | $a_6$ | $a_7$ | $a_8$ | $a_9$ |
|---|---|---|---|---|---|---|---|---|---|
| Walking | 0.742 | 0.397 | −0.152 | −0.070 | 0.014 | −0.094 | 0.033 | −0.156 | 0.061 |
| Running | 0.884 | 0.112 | 0.140 | −0.051 | −0.03 | −0.100 | −0.135 | 0.061 | 0.087 |
| Tumbling | 0.902 | 0.222 | 0.229 | −0.286 | 0.139 | −0.340 | 0.086 | −0.237 | 0.219 |
| Boxing | 1.189 | −0.102 | −0.079 | −0.170 | 0.130 | −0.048 | −0.004 | 0.058 | 0.005 |

It may be understood that the four linear prediction coefficient sets shown in Table 2 are merely examples, and more or fewer linear prediction coefficient sets may be determined depending on a quantity of actions associated with the algorithm input.

In addition, in some embodiments, the index of the linear prediction coefficient set may occupy any appropriate quantity of bits. For example, when a quantity of linear prediction coefficient sets is 4, an index of the linear prediction coefficient sets may occupy 4 bits, for example, may be 0000, 0001, 0010, or 0011. Alternatively, when a quantity of linear prediction coefficient sets is 4, an index of the linear prediction coefficient sets may occupy 2 bits, for example, may be 00, 01, 10, or 11. It may be understood that this is merely an example, and is not intended to limit the scope of the present disclosure.

As described above, the responder device 120 may be preconfigured with a plurality of linear prediction coefficient sets. For example, the responder device 120 may be preconfigured with the four linear prediction coefficient sets shown in Table 2. Each linear prediction coefficient set may be associated with an index of one linear prediction coefficient set. For example, when the index of the linear prediction coefficient set occupies 4 bits, a linear prediction coefficient set associated with walking shown in Table 2 may be associated with the index 0000, a linear prediction coefficient set associated with running may be associated with the index 0001, and so on.

After determining, based on, for example, Formula (1), the index of the linear prediction coefficient set, the responder device 120 may determine a linear prediction coefficient set associated with the index from the plurality of preconfigured linear prediction coefficient sets. For example, when it is determined that the index of the linear prediction coefficient set is 0000, the linear prediction coefficient set associated with walking may be determined from the four linear prediction coefficient sets shown in Table 2. Further, the responder device 120 may scramble a subsequent LTF sequence in the plurality of LTF sequences by using the determined linear prediction coefficient set and the initial scrambled LTF sequence, to obtain a subsequent scrambled LTF sequence.

Similarly, the initiator device 110 may be preconfigured with a plurality of linear prediction coefficient sets that are the same as those of the responder device 110. For example, the initiator device 110 may also be preconfigured with the four linear prediction coefficient sets shown in Table 2. Each linear prediction coefficient set may be associated with an index of one linear prediction coefficient set, and the index is the same as the index in the responder device 110. For example, when the initiator device 110 is preconfigured with the four linear prediction coefficient sets shown in Table 2, a linear prediction coefficient set associated with walking is associated with an index 0000, a linear prediction coefficient set associated with running is associated with an index 0001, and so on.

In addition, after determining, based on, for example, Formula (1), the index of the linear prediction coefficient set, the initiator device 110 may determine a linear prediction coefficient set associated with the index from the plurality of preconfigured linear prediction coefficient sets. For example, when it is determined that the index of the linear prediction coefficient set is 0000, the linear prediction coefficient set associated with walking may be determined from the four linear prediction coefficient sets shown in Table 2. Further, the initiator device 110 may descramble a subsequent scrambled LTF sequence in the plurality of scrambled LTF sequences by using the determined linear prediction coefficient set and the initial descrambled LTF sequence, to obtain a subsequent descrambled LTF sequence.

Although the attacker device may receive an NDP from the responder device 120, because the attacker device is not capable of obtaining the plurality of linear prediction coefficient sets preconfigured in each of the initiator device 110 and the responder device 120, the attacker device is not capable of descrambling an LTF sequence in the NDP. Therefore, the attacker device is not capable of obtaining CSI data of the channel, and is not capable of sensing an action or a behavior of the detection target 130 by using the CSI data. In this way, behavior privacy of the detection target is protected.

*Example*

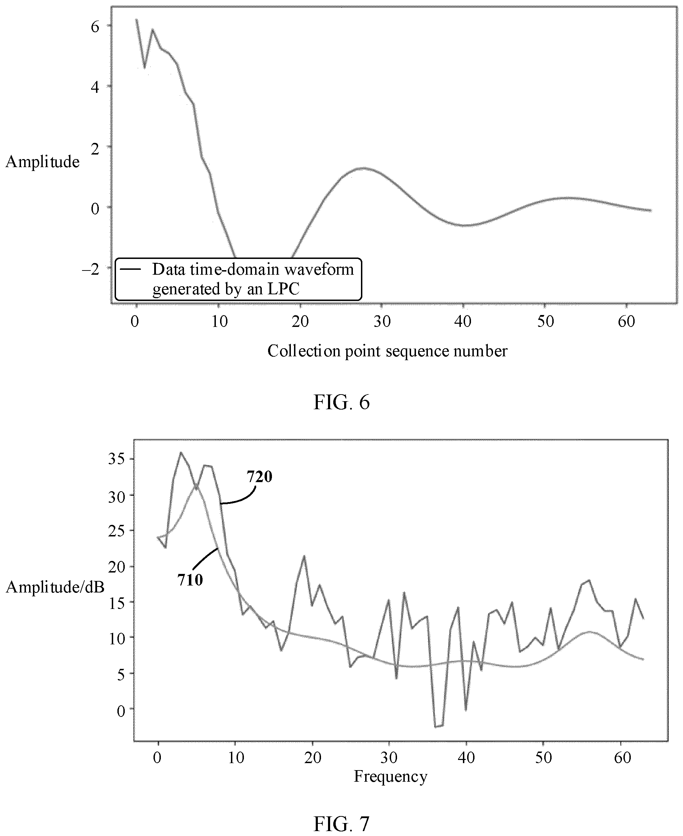

The walking action is used as an example for description. FIG. 5 is a waveform graph of CSI time-domain data that is corresponding to a walking action within a period of time and that is obtained by using a conventional technology. FIG. 6 is a time-domain waveform graph of estimated values of a plurality of LTF sequences determined according to Formula (12).

FIG. 7 is a spectrum of the CSI time-domain data shown in FIG. 5 and a spectrum of the estimated values of the scrambled LTF sequences shown in FIG. 6. As shown in FIG. 7, a spectrum 710 of the estimated value of the scrambled LTF sequence determined by using the foregoing algorithm is continuous. Therefore, a requirement of the action of the detection target on a coherence time can be met. In addition, the spectrum 710 of the estimated value of the scrambled LTF sequence determined by using the foregoing algorithm is close to a spectrum 720 of CSI time-domain data that is input. In other words, the impact of the randomized LTF sequence and the impact of the action of the detection target on the channel have a same correlation. Therefore, the attacker device is not capable of eliminating the impact of the randomized LTF sequence by signal processing or the like to obtain CSI data, and therefore is not capable of identifying the action of the detection target. In this way, an objective of the security sensing may be achieved.

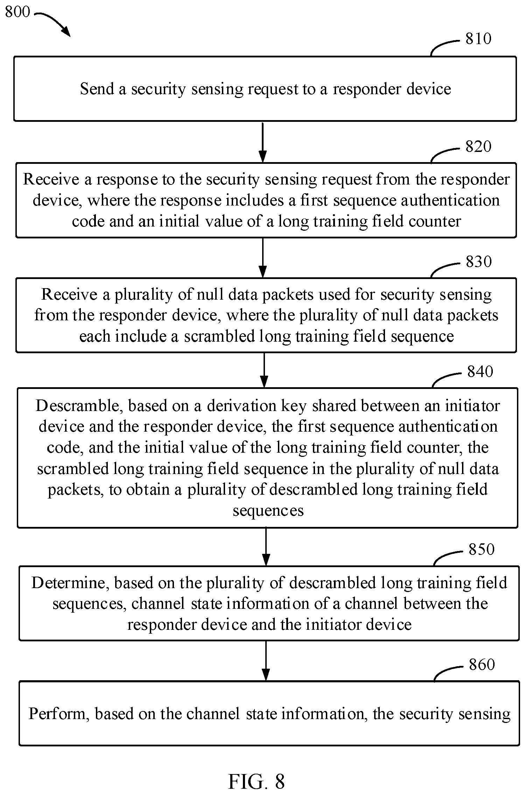

FIG. 8 is a flowchart of an example method 800 for security sensing according to some embodiments of the present disclosure. In some embodiments, the example method 800 may be implemented by an initiator device 110 in an example communication environment 100, for example, may be implemented by a processor or a processing unit of the initiator device 110 in cooperation with another component (for example, a transceiver). In another embodiment, the example method 800 may alternatively be implemented by a communication device independent of the example communication system 100. For ease of description, the example method 800 is described with reference to FIG. 1.

At block 810, the initiator device 110 sends a security sensing request to the responder device 120. At block 820, the initiator device 110 receives a response to the security sensing request from the responder device 120, the response including a first sequence authentication code and an initial value of the LTF counter.

At block 830, the initiator device 110 receives a plurality of NDPs for security sensing from the responder device 120. The plurality of NDPs each include a scrambled LTF sequence.

At block 840, the initiator device 110 descrambles, based on a derivation key shared between the initiator device 110 and the responder device 120, the first sequence authentication code, and the initial value of the LTF counter, scrambled LTF sequences in the plurality of NDPs, to obtain a plurality of descrambled LTF sequences.

At block 850, the initiator device 110 determines, based on the plurality of descrambled LTF sequences, channel state information of a channel between the responder device 120 and the initiator device 110. At block 860, the initiator device 110 performs, based on the channel state information, the security sensing.

In some embodiments, the descrambling the scrambled long training field sequence in the plurality of null data packets includes: The initiator device 110 determines, based on the derivation key, the first sequence authentication code, and the initial value of the long training field counter, an index of a descrambling sequence and an index of a linear prediction coefficient set. The initiator device 110 descrambles an initial scrambled long training field sequence in the plurality of null data packets by using the descrambling sequence, to obtain an initial descrambled long training field sequence. The initiator device 110 descrambles a subsequent scrambled long training field sequence in the plurality of null data packets by using the linear prediction coefficient set and the initial descrambled long training field sequence, to obtain a subsequent descrambled long training field sequence.

In some embodiments, the descrambling a subsequent scrambled long training field sequence in the plurality of null data packets, to obtain a subsequent descrambled long training field sequence includes: obtaining an estimated value of an (n+1)th descrambled long training field sequence according to the following formula:

$$\hat{x}(n) = \sum_{i=1}^{p} a_i \hat{x}(n-i)$$

$\hat{x}(n)$ represents the estimated value of the (n+1)th descrambled long training field sequence, $a_i$ represents an ith linear prediction coefficient in the linear prediction coefficient set, p represents a quantity of elements in the linear prediction coefficient set, where $7 \leq p \leq 15$, $1 \leq i \leq p$, $1 \leq n \leq N-1$, and N represents a quantity of the plurality of null data packets.

In some embodiments, the initiator device 110 sends the security sensing request to the responder device 120 includes: The initiator device 110 sends an initial fine timing measurement request frame to the responder device 120, where a trigger field in the initial fine timing measurement request frame is set to a predefined value, and the predefined value indicates the security sensing request.

In some embodiments, the method 800 further includes: Before receiving each of the plurality of null data packets, the initiator device 110 updates the initial value of the long training field counter in response to receiving a control frame associated with a corresponding null data packet from the responder device 120, to obtain a counter value obtained through updating, where the control frame includes a second sequence authentication code. The initiator device 110 generates, based on the derivation key and the counter value obtained through updating, a first sequence authentication code obtained through updating. If the first sequence authentication code obtained through updating is different from the second sequence authentication code, the initiator device 110 resends the security sensing request to the responder device 120.

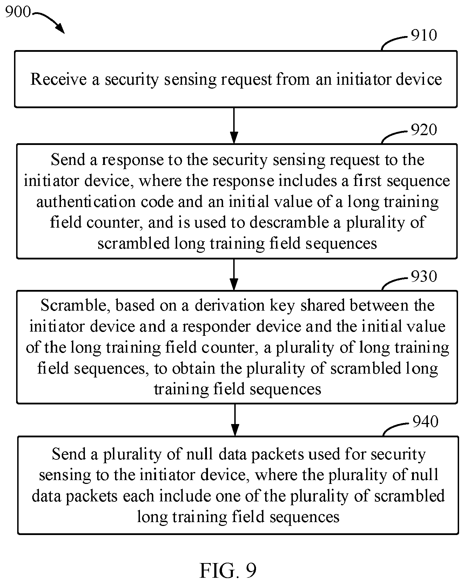

FIG. 9 is a flowchart of an example method 900 for security sensing according to some other embodiments of the present disclosure. In some embodiments, the example method 900 may be implemented by a responder device 120 in an example communication environment 100, for example, may be implemented by a processor or a processing unit of the responder device 120 in cooperation with another component (for example, a transceiver). In another embodiment, the example method 900 may alternatively be implemented by a communication device independent of the example communication system 100. For ease of description, the example method 900 is described with reference to FIG. 1.

At block 910, the responder device 120 receives a security sensing request from the initiator device. At block 920, the responder device 120 sends a response to the security sensing request to the initiator device. The response includes a first sequence authentication code and an initial value of a long training field counter, and is used to descramble a plurality of scrambled long training field sequences.

At block 930, the responder device 120 scrambles, based on a derivation key shared between the initiator device and the responder device and the initial value of the long training field counter, a plurality of long training field sequences, to obtain the plurality of scrambled long training field sequences. At block 940, the responder device 120 sends a plurality of null data packets used for security sensing to the initiator device, where the plurality of null data packets each include one of the plurality of scrambled long training field sequences.

In some embodiments, the scrambling a plurality of long training field sequences, to obtain the plurality of scrambled long training field sequences includes: The responder device 120 determines, based on the derivation key and the initial value of the long training field counter, an index of a scrambling sequence and an index of a linear prediction coefficient set. The responder device 120 scrambles an initial long training field sequence in the plurality of long training field sequences by using the scrambling sequence, to obtain an initial scrambled long training field sequence. The responder device 120 scrambles a subsequent long training field sequence in the plurality of long training field sequences by using the linear prediction coefficient set and the initial scrambled long training field sequence, to obtain a subsequent scrambled long training field sequence.

In some embodiments, the scrambling a subsequent long training field sequence in the plurality of long training field sequences, to obtain a subsequent scrambled long training field sequence includes:
obtaining an estimated value of an $(n+1)^{th}$ scrambled long training field sequence according to the following formula:

$$\hat{x}(n) = \sum_{i=1}^{p} a_i \hat{x}(n - i)$$

$\hat{x}(n)$ represents the estimated value of the $(n+1)^{th}$ scrambled long training field sequence, $a_i$ represents an $i^{th}$ linear prediction coefficient in the linear prediction coefficient set, p represents a quantity of elements in the linear prediction coefficient set, where $7 \leq p \leq 15$, $1 \leq i \leq p$, $1 \leq n \leq N-1$, and N represents a quantity of the plurality of null data packets.

In some embodiments, the responder device 120 receives the security sensing request from the initiator device 110 includes: The responder device 120 receives an initial fine timing measurement request frame from the initiator device 110, where a trigger field in the initial fine timing measurement request frame is set to a predefined value, and the predefined value indicates the security sensing request.

In some embodiments, the method 900 further includes: Before sending each of the plurality of null data packets, the responder device 120 updates the initial value of the long training field counter in response to being to send a control frame associated with a corresponding null data packet to the initiator device 110, to obtain a counter value obtained through updating. The responder device 120 generates, based on the derivation key and the counter value obtained through updating, a first sequence authentication code obtained through updating to use as a second sequence authentication code. The responder device 120 sends the control frame to the initiator device 110, where the control frame includes the second sequence authentication code, and the second sequence authentication code is used by the initiator device 110 to determine whether to resend the security sensing request to the responder device 120.

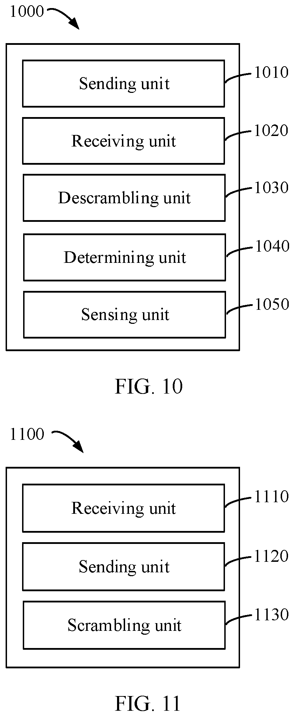

FIG. 10 is a schematic block diagram of an initiator device 1000 according to some embodiments of the present disclosure. The initiator device 1000 may be implemented at the initiator device 110 or may be implemented as a chip or a chip system in the initiator device 110 shown in FIG. 1; or may be implemented at any one of the initiator devices 110-1 to 110-6 or may be implemented as a chip or a chip system in any one of the initiator devices 110-1 to 110-6 shown in FIG. 2. The scope of the present disclosure is not limited in this aspect.

As shown in FIG. 10, the initiator device 1000 includes a sending unit 1010, a receiving unit 1020, a descrambling unit 1030, a determining unit 1040, and a sensing unit 1050. The sending unit 1010 is configured to send a security sensing request to a responder device. The receiving unit 1020 is configured to receive a response to the security sensing request from the responder device, where the response includes a first sequence authentication code and an initial value of the long training field counter. The receiving unit 1020 is further configured to receive a plurality of null data packets used for security sensing from the responder device. The plurality of null data packets each include a scrambled long training field sequence. The descrambling unit 1030 is configured to descramble, based on a derivation key shared between the initiator device and the responder device, the first sequence authentication code, and the initial value of the long training field counter, the scrambled long training field sequence in the plurality of null data packets, to obtain a plurality of descrambled long training field sequences. The determining unit 1040 is configured to determine, based on the plurality of descrambled long training field sequences, channel state information of a channel between the responder device and the initiator device. The sensing unit 1050 is configured to perform, based on the channel state information, the security sensing.

In some embodiments, the descrambling unit 1030 is further configured to: determine, based on the derivation key, the first sequence authentication code, and the initial value of the long training field counter, an index of a descrambling sequence and an index of a linear prediction coefficient set; descramble an initial scrambled long training field sequence in the plurality of null data packets by using the descrambling sequence, to obtain an initial descrambled long training field sequence; and descramble a subsequent scrambled long training field sequence in the plurality of null data packets by using the linear prediction coefficient set and the initial descrambled long training field sequence, to obtain a subsequent descrambled long training field sequence.

In some embodiments, the descrambling unit 1030 is further configured to obtain an estimated value of an $(n+1)^{th}$ descrambled long training field sequence according to the following formula:

$$\hat{x}(n) = \sum_{i=1}^{p} a_i \hat{x}(n - i)$$

$\hat{x}(n)$ represents the estimated value of the $(n+1)^{th}$ descrambled long training field sequence, $a_i$ represents an $i^{th}$ linear prediction coefficient in the linear prediction coefficient set, p represents a quantity of elements in the linear prediction coefficient set, where $7 \leq p \leq 15$, $1 \leq i \leq p$, $1 \leq n \leq N-1$, and N represents a quantity of the plurality of null data packets.

In some embodiments, the sending unit 1010 is further configured to: send an initial fine timing measurement request frame to the responder device, where a trigger field in the initial fine timing measurement request frame is set to a predefined value, and the predefined value indicates the security sensing request.

In some embodiments, the receiving unit 1020 is further configured to: before receiving each of the plurality of null data packets, receive a control frame associated with a corresponding null data packet from the responder device. In such embodiments, the device 1000 further includes an updating unit, configured to: update the initial value of the long training field counter in response to receiving the control frame associated with the corresponding null data packet from the responder device, to obtain a counter value obtained through updating, where the control frame includes a second sequence authentication code; and generate, based on the derivation key and the counter value obtained through updating, a first sequence authentication code obtained through updating. In such embodiments, the sending unit 1010 is further configured to: if the first sequence authentication code obtained through updating is different from the second sequence authentication code, resend the security sensing request to the responder device.

FIG. 11 is a schematic block diagram of a responder device 1100 according to some embodiments of the present disclosure. The responder device 1100 may be implemented at the responder device 120, or may be implemented as a chip or a chip system in the responder device 120 shown in FIG. 1 or FIG. 2. The scope of the present disclosure is not limited in this aspect.

As shown in FIG. 11, the responder device 1100 includes a receiving unit 1110, a sending unit 1120, and a scrambling unit 1130. The receiving unit 1110 is configured to receive a security sensing request from an initiator device. The sending unit 1120 is configured to send a response to the security sensing request to the initiator device, where the response includes a first sequence authentication code and an initial value of a long training field counter, and is used to descramble a plurality of scrambled long training field sequences. The scrambling unit 1130 is configured to scramble, by the responder device based on a derivation key shared between the initiator device and the responder device and the initial value of the long training field counter, a plurality of long training field sequences, to obtain the plurality of scrambled long training field sequences. The sending unit 1120 is further configured to send a plurality of null data packets used for security sensing to the initiator device. The plurality of null data packets each include one of the plurality of scrambled long training field sequences.

In some embodiments, the scrambling unit 1130 is further configured to: determine, based on the derivation key and the initial value of the long training field counter, an index of a scrambling sequence and an index of a linear prediction coefficient set; scramble an initial long training field sequence in the plurality of long training field sequences by using the scrambling sequence, to obtain an initial scrambled long training field sequence; and scramble a subsequent long training field sequence in the plurality of long training field sequences by using the linear prediction coefficient set and the initial scrambled long training field sequence, to obtain a subsequent scrambled long training field sequence.

In some embodiments, the scrambling unit 1130 is further configured to obtain an estimated value of an $(n+1)^{th}$ scrambled long training field sequence according to the following formula:

$$\hat{x}(n) = \sum_{i=1}^{p} a_i \hat{x}(n-i)$$

$\hat{x}(n)$ represents the estimated value of the $(n+1)^{th}$ scrambled long training field sequence, $a_i$ represents an $i^{th}$ linear prediction coefficient in the linear prediction coefficient set, p represents a quantity of elements in the linear prediction coefficient set, where $7 \leq p \leq 15$, $1 \leq i \leq p$, $1 \leq n \leq N-1$, and N represents a quantity of the plurality of null data packets.

It should be understood that, in the foregoing apparatus embodiments, the first scrambled LTF sequence is represented by n=0. In another embodiment, the first scrambled LTF sequence is represented by n=1. In this case, the estimated value $\hat{x}(0)$ of the initial scrambled LTF sequence may alternatively be represented by $\hat{x}(1)$. Correspondingly, $\hat{x}(n)$ may represent an estimated value of an $n^{th}$ scrambled LTF sequence. The scope of the present disclosure is not limited in this aspect.

In some embodiments, the receiving unit 1110 is further configured to receive an initial fine timing measurement request frame from the initiator device, where a trigger field in the initial fine timing measurement request frame is set to a predefined value, and the predefined value indicates the security sensing request.

In some embodiments, the device 1100 further includes an updating unit. The updating unit is configured to: before sending each of the plurality of null data packets, update the initial value of the long training field counter in response to being to send a control frame associated with a corresponding null data packet to the initiator device, to obtain a counter value obtained through updating; and generate, based on the derivation key and the counter value obtained through updating, a first sequence authentication code obtained through updating to use as a second sequence authentication code. In such embodiments, the receiving unit 1100 is further configured to send the control frame to the initiator device, where the control frame includes the second sequence authentication code, and is used by the initiator device to determine whether to resend the security sensing request to the responder device.

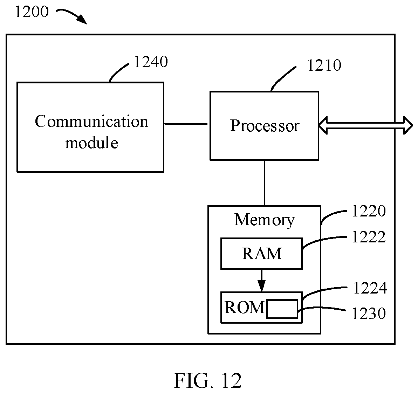

FIG. 12 is a simplified block diagram of an example apparatus 1200 according to some embodiments of the present disclosure. The apparatus 1200 may be configured to implement the initiator device 1000 or the responder device 1100 in the foregoing embodiment. As shown in the figure, the apparatus 1200 includes one or more processors 1210, one or more memories 1220 coupled to the processor 1210, and a communication module 1240 coupled to the processor 1210.

The communication module 1240 may be configured to perform bidirectional communication. The communication module 1240 may have at least one communication interface for communication. The communication interface may include any interface that is needed for communicating with another device.

The processor 1210 may be of any type appropriate for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The apparatus 1200 may have a plurality of processors, such as application-specific integrated circuit chips that belong to a clock synchronized with a main processor in time.

The memory 1220 may include one or more nonvolatile memories and one or more volatile memories. An example of the nonvolatile memory includes but is not limited to at least one of the following: a read-only memory (Read-Only Memory, ROM) 1224, an erasable programmable read-only memory (Erasable Programmable Read-Only Memory, EPROM), a flash memory, a hard disk, a compact disc (Compact Disc, CD), a digital versatile disc (Digital Versatile Disc, DVD), or another magnetic storage and/or optical storage. An example of the volatile memory includes but is not limited to at least one of the following: a random access memory (Random Access Memory, RAM) 1222, or another volatile memory that does not last for power-off duration.

A computer program 1230 includes computer-executable instructions executed by an associated processor 1210. The program 1230 may be stored in the ROM 1224. The processor 1210 may perform any appropriate action and processing by loading the program 1230 into the RAM 1222.

Embodiments of the present disclosure may be implemented by using the program 1230, to enable the apparatus 1200 to perform any process discussed with reference to FIG. 3 to FIG. 9. Embodiments of the present disclosure may alternatively be implemented by using hardware or a combination of software and hardware.

In some embodiments, the program 1230 may be tangibly included in a computer-readable medium, and the computer-readable medium may be included in the apparatus 1200 (for example, in the memory 1220) or another storage device that may be accessed by the apparatus 1200. The program 1230 may be loaded from the computer-readable medium into the RAM 1222 for execution. The computer-readable medium may include any type of tangible nonvolatile memory, for example, the ROM, the EPROM, the flash memory, the hard disk, the CD, the DVD, or the like.

In some embodiments, the communication module 1240 in the apparatus 1200 may be implemented as a transmitter and a receiver (or a transceiver), and may be configured to send/receive system information, for example, a management frame, an acknowledgment frame, or the like. In addition, the apparatus 1200 may further include one or more of a scheduler, a controller, and a radio frequency/antenna. Details are not described in the present disclosure.

In another implementation, the radio frequency/antenna may be disposed independent of a processor that performs baseband processing. For example, in a distributed scenario, the radio frequency/antenna may be remotely disposed independent of the apparatus 1200.

For example, the apparatus 1200 may be implemented as an initiator device or a responder device, or may be implemented as a chip or a chip system in an initiator device, or may be implemented as a chip or a chip system in a responder device. This is not limited in this embodiment of the present disclosure.

Generally, various embodiments of the present disclosure may be implemented by hardware, a dedicated circuit, software, logic, or any combination thereof. Some aspects may be implemented by hardware, and other aspects may be implemented by firmware or software, and may be performed by a controller, a microprocessor, or another computing device. Although various aspects of embodiments of the present disclosure are shown and described as block diagrams, flowcharts, or represented by some other graphics, it should be understood that blocks, apparatuses, systems, technologies, or methods described in this specification may be implemented as non-limiting examples in hardware, software, firmware, dedicated circuits, logic, general-purpose hardware, controllers, other computing devices, or a combination thereof.

The present disclosure further provides at least one computer program product tangibly stored on a non-transitory computer-readable storage medium. The computer program product includes computer-executable instructions, such as instructions that are included in a program module and that are executed in a device on a real or virtual processor of a target to perform the process/method as described above with reference to FIG. 3 to FIG. 9. Generally, the program module includes a routine, a program, a library, an object, a class, a component, a data structure, and the like for executing a particular task or implementing a particular abstract data type. In various embodiments, functions of program modules may be combined or a function of a program module may be split as needed. Machine-executable instructions used for the program module may be executed locally or within a distributed device. In the distributed device, the program module may be located in both a local storage medium and a remote storage medium.

Computer program code for performing the method in the present disclosure may be written in one or more programming languages. The computer program code may be provided to a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In a context of the present disclosure, the computer program code or related data may be carried by any appropriate carrier, to enable a device, an apparatus, or a processor to perform various processing and operations described above. Examples of the carrier include a signal, a computer-readable medium, and the like. Examples of the signal may include propagating signals in electrical, optical, radio, sound, or other forms, such as carrier waves and infrared signals.

The computer-readable medium may be any tangible medium that includes or stores a program used for or related to a system, an apparatus, or a device for instruction execution. The computer-readable medium may be a computer-readable signal medium or a computer-readable storage medium. The computer-readable medium may include but not be limited to an electronic, magnetic, optical, electromagnetic, infrared, or semiconductor system, an apparatus, or a device, or any appropriate combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, although operations of the methods disclosed in the present disclosure are described in a particular order in the accompanying drawings, this does not require or imply that these operations need to be performed in the particular order or that all of the shown operations need to be performed to achieve a desired result. Instead, execution orders of steps depicted in the flowcharts may change. Additionally or optionally, some steps may be omitted, a plurality of steps may be combined into one step for execution, and/or one step may be decomposed into a plurality of steps for execution. It should further be noted that features and functions of two or more apparatuses according to the present disclosure may be specified in one apparatus. On the contrary, features and functions of one apparatus described above may be further divided into a plurality of apparatuses for materialization.

Implementations of the present disclosure are described above. The foregoing descriptions are examples, not exhaustive, and are not limited to the disclosed implementations. Many modifications and changes are apparent to those of ordinary skill in the art without departing from the scope and spirit of the illustrated implementations. Selection of terms used in this specification is intended to better explain implementation principles, actual application, or improvements to technologies in the market, or to enable another person of ordinary skill in the art to understand the implementations disclosed in this specification.

**Claims**

1.  A method for security sensing, comprising:

    sending, by an initiator device, a security sensing request to a responder device;
    receiving, by the initiator device, a response to the security sensing request from the responder device, wherein the response comprises a first sequence authentication code and an initial value of a long training field counter;
    receiving, by the initiator device, a plurality of null data packets used for the security sensing from the responder device, wherein the plurality of null data packets each comprise a scrambled long training field sequence;
    descrambling, by the initiator device based on a derivation key shared between the initiator device and the responder device, the first sequence authentication code, and the initial value of the long training field counter, the scrambled long training field sequences in the plurality of null data packets, to obtain a plurality of descrambled long training field sequences;
    determining, by the initiator device based on the plurality of descrambled long training field sequences, channel state information of a channel between the responder device and the initiator device; and
    performing, by the initiator device based on the channel state information, the security sensing.

2.  The method according to claim 1, wherein the descrambling the scrambled long training field sequences in the plurality of null data packets comprises:

    determining, by the initiator device based on the derivation key, the first sequence authentication code, and the initial value of the long training field counter, an index of a descrambling sequence and an index of a linear prediction coefficient set;
    descrambling an initial scrambled long training field sequence in the plurality of null data packets by using the descrambling sequence, to obtain an initial descrambled long training field sequence; and
    descrambling a subsequent scrambled long training field sequence in the plurality of null data packets by using the linear prediction coefficient set and the initial descrambled long training field sequence, to obtain a subsequent descrambled long training field sequence.

3.  The method according to claim 2, wherein the descrambling a subsequent scrambled long training field sequence in the plurality of null data packets, to obtain a subsequent descrambled long training field sequence comprises:

    obtaining an estimated value of an $(n+1)^{th}$ descrambled long training field sequence according

$$\hat{x}(n) = \sum_{i=1}^{p} a_i \hat{x}(n-i),$$

    wherein
    $\hat{x}(n)$ represents the estimated value of the $(n+1)^{th}$ descrambled long training field sequence, $a_i$ represents an $i^{th}$ linear prediction coefficient in the linear prediction coefficient set, and p represents a quantity of elements in the linear prediction coefficient set, wherein $7 \leq p \leq 15$, $1 \leq i \leq p$, $1 \leq n \leq N-1$, and N represents a quantity of the plurality of null data packets.

4.  The method according to claim 1, wherein the sending, by an initiator device, a security sensing request to a responder device comprises:

sending, by the initiator device, an initial fine timing measurement request frame to the responder device, wherein a trigger field in the initial fine timing measurement request frame is set to a predefined value, and the predefined value indicates the security sensing request.

5. The method according to claim 1, further comprising:

before receiving each of the plurality of null data packets, updating, by the initiator device, the initial value of the long training field counter in response to receiving a control frame associated with the corresponding null data packet from the responder device, to obtain a counter value obtained through updating, wherein the control frame comprises a second sequence authentication code;
generating, based on the derivation key and the counter value obtained through updating, a first sequence authentication code obtained through updating; and
if the first sequence authentication code obtained through updating is different from the second sequence authentication code, resending, by the initiator device, the security sensing request to the responder device.

6. A method for security sensing, comprising:

receiving, by a responder device, a security sensing request from an initiator device;
sending, by the responder device, a response to the security sensing request to the initiator device, wherein the response comprises a first sequence authentication code and an initial value of a long training field counter, and is used to descramble a plurality of scrambled long training field sequences;
scrambling, by the responder device based on a derivation key shared between the initiator device and the responder device and the initial value of the long training field counter, a plurality of long training field sequences, to obtain the plurality of scrambled long training field sequences; and
sending, by the responder device, a plurality of null data packets used for the security sensing to the initiator device, wherein the plurality of null data packets each comprise one of the plurality of scrambled long training field sequences.

7. The method according to claim 6, wherein the scrambling a plurality of long training field sequences, to obtain the plurality of scrambled long training field sequences comprises:

determining, by the responder device based on the derivation key and the initial value of the long training field counter, an index of a scrambling sequence and an index of a linear prediction coefficient set;
scrambling an initial long training field sequence in the plurality of long training field sequences by using the scrambling sequence, to obtain an initial scrambled long training field sequence; and
scrambling a subsequent long training field sequence in the plurality of long training field sequences by using the linear prediction coefficient set and the initial scrambled long training field sequence, to obtain a subsequent scrambled long training field sequence.

8. The method according to claim 7, wherein the scrambling a subsequent long training field sequence in the plurality of long training field sequences to obtain a subsequent scrambled long training field sequence comprises:

obtaining an estimated value of an $(n+1)^{th}$ scrambled long training field sequence according to the following formula:

$$\hat{x}(n) = \sum_{i=1}^{p} a_i \hat{x}(n-i),$$

wherein
$\hat{x}(n)$ represents the estimated value of the $(n+1)^{th}$ scrambled long training field sequence, $a_i$ represents an $i^{th}$ linear prediction coefficient in the linear prediction coefficient set, and p represents a quantity of elements in the linear prediction coefficient set, wherein $7 \leq p \leq 15$, $1 \leq i \leq p$, $1 \leq n \leq N-1$, and N represents a quantity of the plurality of null data packets.

9. The method according to claim 6, wherein the receiving, by a responder device, a security sensing request from an initiator device comprises:

receiving, by the responder device, an initial fine timing measurement request frame from the initiator device, wherein a trigger field in the initial fine timing measurement request frame is set to a predefined value, and the predefined value indicates the security sensing request.

**10.** The method according to claim 6, further comprising:

before sending each of the plurality of null data packets, updating, by the responder device, the initial value of the long training field counter in response to being to send a control frame associated with the corresponding null data packet to the initiator device, to obtain a counter value obtained through updating;

generating, based on the derivation key and the counter value obtained through updating, a first sequence authentication code obtained through updating to use as a second sequence authentication code; and

sending, by the responder device, the control frame to the initiator device, wherein the control frame comprises the second sequence authentication code, and the second sequence authentication code is used by the initiator device to determine whether to resend the security sensing request to the responder device.

**11.** An initiator device, comprising:

a sending unit, configured to send a security sensing request to a responder device;
a receiving unit, configured to:

receive a response to the security sensing request from the responder device, wherein the response comprises a first sequence authentication code and an initial value of a long training field counter; and
receive a plurality of null data packets used for the security sensing from the responder device, wherein the plurality of null data packets each comprise a scrambled long training field sequence;

a descrambling unit, configured to descramble, based on a derivation key shared between the initiator device and the responder device, the first sequence authentication code, and the initial value of the long training field counter, the scrambled long training field sequences in the plurality of null data packets, to obtain a plurality of descrambled long training field sequences;

a determining unit, configured to determine, based on the plurality of descrambled long training field sequences, channel state information of a channel between the responder device and the initiator device; and

a sensing unit, configured to perform, based on the channel state information, the security sensing.

**12.** The device according to claim 11, wherein the descrambling unit is further configured to:

determine, based on the derivation key, the first sequence authentication code, and the initial value of the long training field counter, an index of a descrambling sequence and an index of a linear prediction coefficient set;

descramble an initial scrambled long training field sequence in the plurality of null data packets by using the descrambling sequence, to obtain an initial descrambled long training field sequence; and

descramble a subsequent scrambled long training field sequence in the plurality of null data packets by using the linear prediction coefficient set and the initial descrambled long training field sequence, to obtain a subsequent descrambled long training field sequence.

**13.** The device according to claim 12, wherein the descrambling unit is further configured to:

obtain an estimated value of an $(n+1)^{th}$ descrambled long training field sequence based on the following formula:

$$\hat{x}(n) = \sum_{i=1}^{p} a_i \hat{x}(n-i),$$

wherein
$\hat{x}(n)$ represents the estimated value of the $(n+1)^{th}$ descrambled long training field sequence, $a_i$ represents an $i^{th}$ linear prediction coefficient in the linear prediction coefficient set, and p represents a quantity of elements in the linear prediction coefficient set, wherein $7 \leq p \leq 15$, $1 \leq i \leq p$, $1 \leq n \leq N-1$, and N represents a quantity of the plurality of null data packets.

**14.** The device according to claim 11, wherein the sending unit is further configured to:

send an initial fine timing measurement request frame to the responder device, wherein a trigger field in the initial fine timing measurement request frame is set to a predefined value, and the predefined value indicates the security sensing request.

**15.** The device according to claim 11, wherein the receiving unit is further configured to:

before receiving each of the plurality of null data packets, receive a control frame associated with a corresponding null data packet from the responder device;
the device further comprises an updating unit, configured to:

update the initial value of the long training field counter in response to receiving a control frame associated with a corresponding null data packet from the responder device, to obtain a counter value obtained through updating, wherein the control frame comprises a second sequence authentication code; and
generate, based on the derivation key and the counter value obtained through updating, a first sequence authentication code obtained through updating; and
the sending unit is further configured to: if the first sequence authentication code obtained through updating is different from the second sequence authentication code, resend the security sensing request to the responder device.

**16.** A responder device, comprising:

a receiving unit, configured to receive a security sensing request from an initiator device;
a sending unit, configured to send a response to the security sensing request to the initiator device, wherein the response comprises a first sequence authentication code and an initial value of a long training field counter, and is used to descramble a plurality of scrambled long training field sequences; and
a scrambling unit, configured to scramble, by the responder device based on a derivation key shared between the initiator device and the responder device and the initial value of the long training field counter, a plurality of long training field sequences, to obtain the plurality of scrambled long training field sequences, wherein the sending unit is further configured to send a plurality of null data packets used for the security sensing to the initiator device, wherein the plurality of null data packets each comprise one of the plurality of scrambled long training field sequences.

**17.** The device according to claim 16, wherein the scrambling unit is further configured to:

determine, based on the derivation key and the initial value of the long training field counter, an index of a scrambling sequence and an index of a linear prediction coefficient set;
scramble an initial long training field sequence in the plurality of long training field sequences by using the scrambling sequence, to obtain an initial scrambled long training field sequence; and
scramble a subsequent long training field sequence in the plurality of long training field sequences by using the linear prediction coefficient set and the initial scrambled long training field sequence, to obtain a subsequent scrambled long training field sequence.

**18.** The device according to claim 17, wherein the scrambling unit is further configured to:

obtain an estimated value of an $(n+1)^{th}$ scrambled long training field sequence based on the following formula:

$$\hat{x}(n) = \sum_{i=1}^{p} a_i \hat{x}(n-i),$$

wherein
$\hat{x}(n)$ represents the estimated value of the $(n+1)^{th}$ scrambled long training field sequence, $a_i$ represents an $i^{th}$ linear prediction coefficient in the linear prediction coefficient set, and p represents a quantity of elements in the linear prediction coefficient set, wherein $7 \leq p \leq 15$, $1 \leq i \leq p$, $1 \leq n \leq N-1$, and N represents a quantity of the plurality of null data packets.

**19.** The device according to claim 16, wherein the receiving unit is further configured to:

receive an initial fine timing measurement request frame from the initiator device, wherein a trigger field in the initial fine timing measurement request frame is set to a predefined value, and the predefined value indicates the security sensing request.

20. The device according to claim 16, further comprising:
an updating unit, configured to:

before sending each of the plurality of null data packets, update the initial value of the long training field counter in response to being to send a control frame associated with a corresponding null data packet to the initiator device, to obtain a counter value obtained through updating; and
generate, based on the derivation key and the counter value obtained through updating, a first sequence authentication code obtained through updating to use as a second sequence authentication code, wherein
the receiving unit is further configured to send the control frame to the initiator device, wherein the control frame comprises a second sequence authentication code, and is used by the initiator device to determine whether to resend the security sensing request to the responder device.

21. A computer-readable storage medium, wherein the computer-readable storage medium stores a computer program, and when the computer program is executed by a processor, the method according to any one of claims 1 to 5 or the method according to any one of claims 6 to 10 is implemented.

22. A chip, comprising a processing circuit and a communication interface, wherein the processing circuit is configured to perform the method according to any one of claims 1 to 5 or the method according to any one of claims 6 to 10.

23. A computer program product, wherein the computer program product comprises machine-executable instructions, and when the machine-executable instructions are executed by an initiator device, the initiator device is enabled to implement the method according to any one of claims 1 to 5 or the method according to any one of claims 6 to 10.

24. An initiator apparatus, wherein the initiator apparatus comprises a component for implementing the method according to any one of claims 1 to 5.

25. A responder apparatus, wherein the responder apparatus comprises a component for implementing the method according to any one of claims 6 to 10.

FIG. 1

FIG. 2

300

120
Responder device

110
Initiator device

310 Four-way handshaking procedure

320 Security sensing request

330 Response to the security sensing request

340 Scrambling

350 Null data packet

360 Descrambling

370 Determining CSI

380 Security sensing

FIG. 3

400

410

420

| Category (category) | Public action (public action) | Trigger (trigger) | Location configuration information measurement request (LCI measurement request) (optional) | Location civic measurement request (location civic measurement request) (optional) | Fine timing measurement parameter (fine timing measurement parameters) (optional) | Ranging parameter (ranging parameters) (optional) | Location configuration information measurement report (LCI Report) (optional) | Location civic report (Location Civic Report) (optional) |
|---|---|---|---|---|---|---|---|---|
| Octet: 1 | 1 | Elongatable | Elongatable | Elongatable | Elongatable | Elongatable | Elongatable | Elongatable |

FIG. 4A

EP 4 354 744 A1

420 ⟍

430 ⟋

| Element ID (Element ID) | Length (Length) | Element ID extension (Element ID Extension) | Ranging parameter (Ranging Parameters) | Ranging subelement (Ranging Subelement) |
|---|---|---|---|---|
| 1 | 1 | 1 | 6 | Elongatable |

Octet:

FIG. 4B

430 ⟍

431 ⟋

| Status indication (Status Indication) | Value (Value) | Initiator to responder location measurement report feedback (I2R LMR Feedback) | Secure LTF request (Secure LTF req.) | Secure LTF support (Secure LTF Support) | Ranging priority (Ranging Priority) |
|---|---|---|---|---|---|
| 2 | 5 | 1 | 1 | 1 | 2 |

Bit:

| Responder to initiator time of arrival type (R2I TOA Type) | Initiator to responder time of arrival type (I2R TOA Type) | Responder to initiator angle of arrival request (R2I AOA Request) | Initiator to responder angle of arrival request (I2R AOA Request) | ... |
|---|---|---|---|---|
| 1 | 1 | 1 | 1 | |

Bit:

FIG. 4C

440

| Element ID (Element ID) | Length (Length) | Element ID extension (Element ID Extension) | Secure LTF counter (Secure LTF counter) | LTF generation SAC (LTF Generation SAC) | Ranging management sequence authentication code (Ranging Management SAC) | Measurement result LTF offset (Measurement Result LTF offset) |
|---|---|---|---|---|---|---|

442 441

Octet:    1    1    1    6    2    2    1

## FIG. 4D

450

451

| Associated identifier 11 (AID 11) | SAC | Disambiguation (Disambiguation) frame | Reserved (RSVD) bit |
|---|---|---|---|

Bit:    11    16    1    4

## FIG. 4E

FIG. 5

FIG. 6

FIG. 7

800 ⌐

810

Send a security sensing request to a responder device

820

Receive a response to the security sensing request from the responder device, where the response includes a first sequence authentication code and an initial value of a long training field counter

830

Receive a plurality of null data packets used for security sensing from the responder device, where the plurality of null data packets each include a scrambled long training field sequence

840

Descramble, based on a derivation key shared between an initiator device and the responder device, the first sequence authentication code, and the initial value of the long training field counter, the scrambled long training field sequence in the plurality of null data packets, to obtain a plurality of descrambled long training field sequences

850

Determine, based on the plurality of descrambled long training field sequences, channel state information of a channel between the responder device and the initiator device

860

Perform, based on the channel state information, the security sensing

FIG. 8

900

910

Receive a security sensing request from an initiator device

920

Send a response to the security sensing request to the initiator device, where the response includes a first sequence authentication code and an initial value of a long training field counter, and is used to descramble a plurality of scrambled long training field sequences

930

Scramble, based on a derivation key shared between the initiator device and a responder device and the initial value of the long training field counter, a plurality of long training field sequences, to obtain the plurality of scrambled long training field sequences

940

Send a plurality of null data packets used for security sensing to the initiator device, where the plurality of null data packets each include one of the plurality of scrambled long training field sequences

FIG. 9

1000

| Sending unit | — 1010 |
|---|---|
| Receiving unit | — 1020 |
| Descrambling unit | — 1030 |
| Determining unit | — 1040 |
| Sensing unit | — 1050 |

FIG. 10

1100

| Receiving unit | — 1110 |
|---|---|
| Sending unit | — 1120 |
| Scrambling unit | — 1130 |

FIG. 11

1200

1240

1210

Communication module

Processor

Memory

1220

RAM

1222

ROM

1224

1230

FIG. 12

# EP 4 354 744 A1

**INTERNATIONAL SEARCH REPORT**

International application No.

**PCT/CN2022/098477**

| A. | CLASSIFICATION OF SUBJECT MATTER |
|---|---|

H04B 1/707(2011.01)i; H04B 1/7103(2011.01)i; H04L 25/02(2006.01)i

According to International Patent Classification (IPC) or to both national classification and IPC

| B. | FIELDS SEARCHED |
|---|---|

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

USTXT; EPTXT; WOTXT; CNTXT; CNABS; VEN; CNKI; IEEE: 精细定时测量, 序列验证码, 序列鉴别码, 序列鉴权码, 序列鉴定码, 序列认证码, 训练字段, 训练码, 训练序列, 训练符号, 长训练字段, 长训码, 计数器, 加扰, 加密, 解扰, 感知, CSI, FTM, IFTM, IFTMR, SAC, LTF, LTFC, Sequence Authentication Code, Fine Timing Measurement, Long Training Field, counter, scrambling

| C. | DOCUMENTS CONSIDERED TO BE RELEVANT |
|---|---|

| Category* | Citation of document, with indication, where appropriate, of the relevant passages | Relevant to claim No. |
|---|---|---|
| A | TW 201842747 A (QUALCOMM INC.) 01 December 2018 (2018-12-01) description, paragraphs [0064], [0065], and [0080]-[0087], and figure 6 | 1-25 |
| A | CN 112350809 A (HUAWEI TECHNOLOGIES CO., LTD.) 09 February 2021 (2021-02-09) description, paragraphs [0084]-[0096] and [0145], and figure 3 | 1-25 |
| A | TW 201911784 A (QUALCOMM INC.) 16 March 2019 (2019-03-16) entire document | 1-25 |
| A | CN 107979402 A (HUAWEI TECHNOLOGIES CO., LTD.) 01 May 2018 (2018-05-01) entire document | 1-25 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 August 2022** | **18 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098477**

| Patent document cited in search report | | | Publication date (day/month/year) | Patent family member(s) | | | Publication date (day/month/year) |
|---|---|---|---|---|---|---|---|
| TW | 201842747 | A | 01 December 2018 | US | 2018287826 | A1 | 04 October 2018 |
| | | | | WO | 2018187433 | A1 | 11 October 2018 |
| | | | | US | 10135638 | B2 | 20 October 2018 |
| CN | 112350809 | A | 09 February 2021 | WO | 2021023093 | A1 | 11 February 2021 |
| TW | 201911784 | A | 16 March 2019 | US | 2019036739 | A1 | 31 January 2019 |
| | | | | WO | 2019027831 | A1 | 07 February 2019 |
| CN | 107979402 | A | 01 May 2018 | EP | 3528395 | A1 | 21 August 2019 |
| | | | | US | 2019253184 | A1 | 15 August 2019 |
| | | | | WO | 2018076788 | A1 | 03 May 2018 |
| | | | | CN | 107979402 | B | 08 September 2020 |
| | | | | EP | 3528395 | A4 | 02 October 2019 |

Form PCT/ISA/210 (patent family annex) (January 2015)